# EUROPÄISCHE PATENTSCHRIFT

(11) **EP 0 657 506 B1**
(45) Veröffentlichungstag und Bekanntmachung des Hinweises auf die Patenterteilung: **16.09.1998**
(21) Anmeldenummer: 94117935.0
(22) Anmeldetag: 14.11.1994
(51) Int. Cl.: C09B 43/12, C09B 62/09, C09B 35/56, C09B 56/04, C09D 11/00, D21H 21/28

(54) **Neue Azofarbstoffe, deren Herstellung und Verwendung**
Azo dyes, their preparation and use
Colorants azoiques, leur préparation et leur utilisation

(30) Priorität: 26.11.1993 DE 4340354
(43) Veröffentlichungstag der Anmeldung: 14.06.1995
(73) Patentinhaber: BAYER AG, 51368 Leverkusen (DE)
(72) Erfinder: Hassenrück, Dr. Karin, D-40468 Düsseldorf (DE); Reinhardt, Dr. Karl-Heinz, D-51377 Leverkusen (DE); Wild, Dr. Peter, D-51519 Odenthal (DE); Wunderlich, Dr. Klaus, D-51373 Leverkusen (DE)

(56) Entgegenhaltungen:
- EP-A- 0 233 769
- EP-A- 0 356 080
- JP-A-63 317 569
- CHEMICAL ABSTRACTS, vol. 106, no. 22, 1. Juni 1987, Columbus, Ohio, US; abstract no. 178101d, N.OTA ET AL. 'water-soluble disazo dyes for inks' Seite 88 ;

## Beschreibung

Die Erfindung betrifft neue Azofarbstoffe, ein Verfahren zu ihrer Herstellung sowie ihre Verwendung. Schwarzfarbstoffe sind bereits aus US-A 4 752 337 oder EP-A-35 60 80 bekannt. Diese galt es jedoch hinsichtlich ihrer anwendungstechnischen Eigenschaften zu verbessern. Verdoppelte Disazofarbstoffe sind aus JP-A-6 331 7569 oder EP-A-0 233 769 bekannt.

Gegenstand der Erfindung sind Azofarbstoffe der allgemeinen Formel 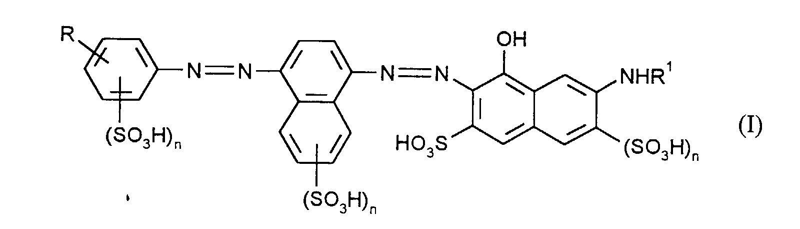 worin
- R: für NHR², -CH=CH-R³, -CH₂-CH₂-R³ oder 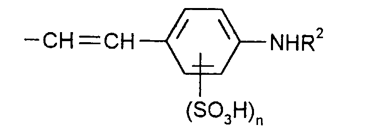 steht,
- R¹: für Wasserstoff, gegebenenfalls substituiertes C₁-C₄ Alkyl, gegebenenfalls substituiertes C₁-C₄ Alkylcarbonyl, gegebenenfalls substituiertes Phenyl oder gegebenenfalls substituiertes Phenylcarbonyl steht
- R²: für -W-NHR³ steht,
worin
W für ein Brückenglied steht,
- R³: für 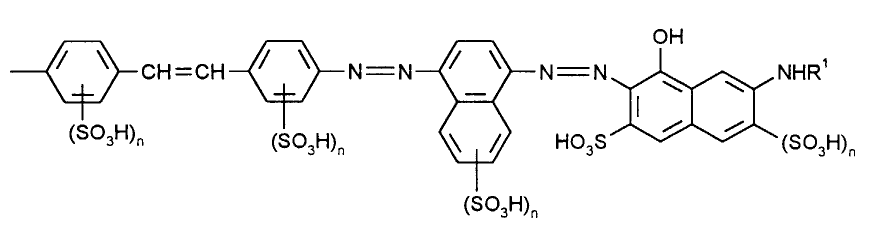 und n jeder unabhängig voneinander für 0 oder 1 steht.

Als geeignete Substituenten für gegebenenfalls substituiertes C₁-C₄-Alkyl und C₁-C₄-Alkylcarbonyl in der Definition von R¹ sind OH oder Amino und für gegebenenfalls substituiertes Phenyl und Phenylcarbonyl SO₃H und COOH zu nennen.

Als Beispiele für W seien genannt 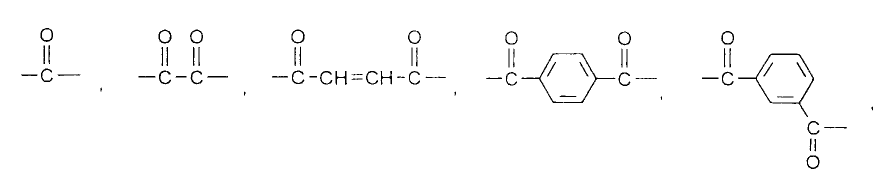 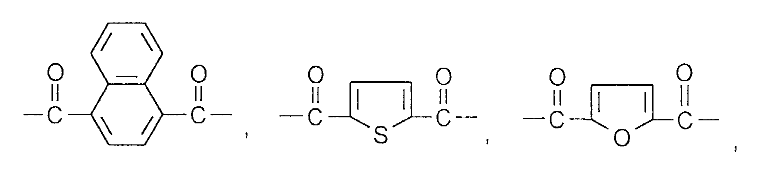 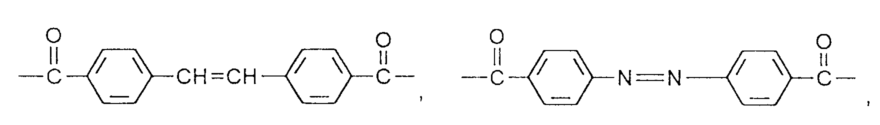 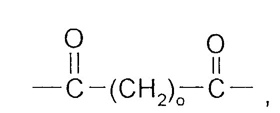 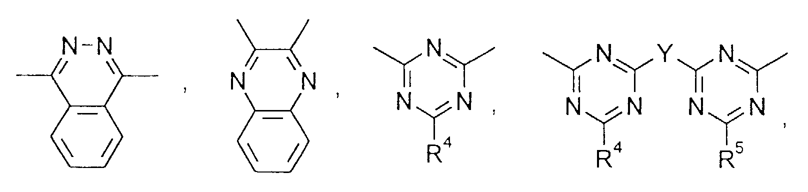 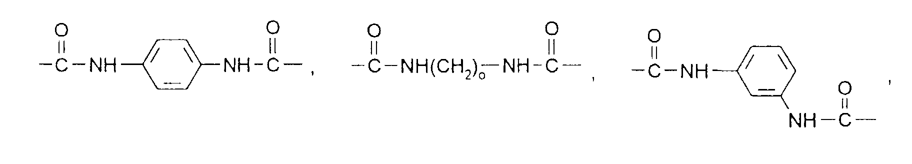 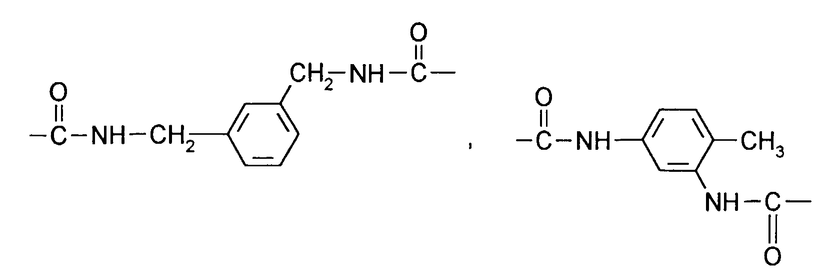 wobei
- R⁴, R⁵: unabhängig voneinander für Halogen, Hydroxy, C₁-C₆-Alkoxy, C₁-C₆-Alkyl oder eine gegebenenfalls substituierte Aminogruppe stehen und
- o: für 1 bis 6 steht.

Als Beispiele für Y seien genannt 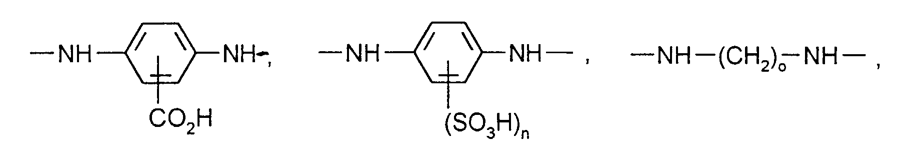 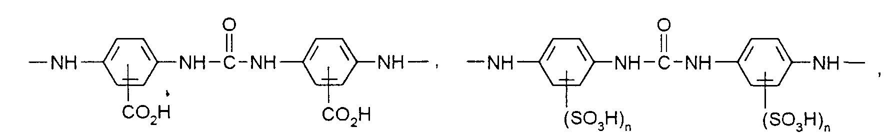 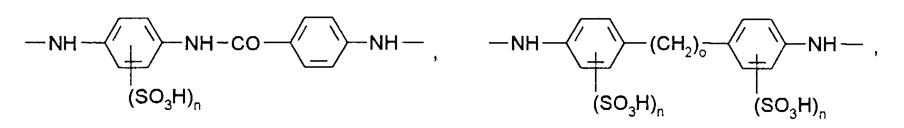 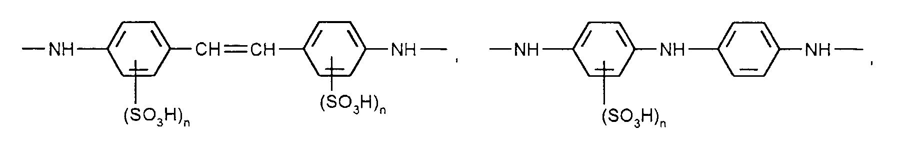 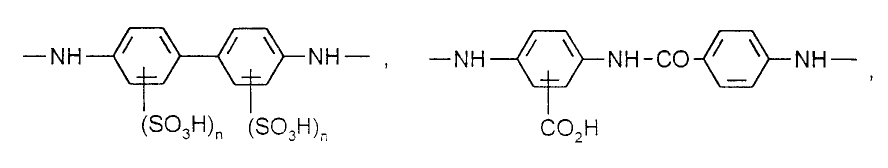 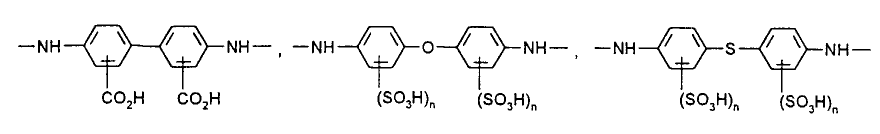 wobei
- o: für 1 bis 6 steht und
- n: jeweils unabhängig voneinander für 0 oder 1 steht.

Vorzugsweise stehen R⁴ und R⁵ unabhängig voneinander für Halogen, insbesondere Fluor, Chlor oder Brom, oder eine gegebenenfalls substituierte Aminogruppe der Formel

-NR⁷R⁸,

worin
- R⁷ und R⁸: unabhängig voneinander für Wasserstoff, einen aliphatischen, aromatischen, araliphatischen oder cycloaliphatischen Rest stehen,
- R⁸: außerdem auch für Hydroxy, C₁-C₄-Alkoxy, Amino, Phenylamino oder C₁-C₄-Alkoxyamino steht,
oder
- R⁷ und R⁸: zusammen mit dem Stickstoffatom an das sie gebunden sind einen 3- bis 8-gliedrigen, vorzugsweise 5- bis 7-gliedrigen, gesättigten oder ungesättigten Ring bilden, der gegebenenfalls 1 oder 2 weitere Heteroatome aus der Reihe Sauerstoff, Schwefel, Stickstoff enthält, und der gegebenenfalls durch C₁-C₄-Alkyl, C₁-C₄-Hydroxyalkyl oder C₁-C₄-Aminoalkyl substituiert ist.

Beispiele für aliphatische Reste in der Definition von R⁷ und R⁸ sind Alkylreste, insbesondere C₁-C₆-Alkyl, welches gegebenenfalls durch C₁-C₄-Alkoxy, C₅-C₆-Cycloalkyl, Hydroxy, Carboxy, Sulfato, Sulfo oder Amino substituiert ist und welches gegebenenfalls durch eine oder mehrere Iminogruppen unterbrochen ist.

Beispiele für aromatische und araliphatische Reste in der Definition von R⁷ und R⁸ sind Phenyl- und Naphthylreste bzw. Phenyl-C₁-C₄-alkyl und Naphthyl-C₁-C₄-alkyl, wobei die Phenyl- und Naphthylreste jeweils gegebenenfalls ein- oder mehrfach, gleich oder verschieden durch Hydroxy, Carboxy, Sulfo, C₁-C₄-Alkyl oder C₁-C₄-Alkoxy substituiert sind. Beispiele für cycloaliphatische Reste in der Definition von R⁷ und R⁸ sind Cyclopentyl und Cyclohexyl.

Bevorzugt sind Aminogruppen der Formel

-NR⁷R⁸

worin
- R⁷ und R⁸: unabhängig voneinander für Wasserstoff oder für gegebenenfalls durch Carboxy, Hydroxy, C₁-C₄-Alkoxy, Amino oder Sulfo substituiertes C₁-C₆-Alkyl oder für Phenyl-C₁-C₄-alkyl stehen,
- R⁸: außerdem für einen durch ein Polyalkylenpolyamin substituierten Ethylrest, vorzugsweise für einen Rest -CH₂CH₂-(NCH₂CH₂)₁₋₄-NH₂ steht,
oder
- R⁷ und R⁸: gemeinsam mit dem Stickstoffatom an welches sie gebunden sind einen gesättigten 5- oder 6-gliedrigen Ring bilden, der ein weiteres Sauerstoff- oder Stickstoffatom enthalten kann und der gegebenenfalls durch C₁-C₄-Alkyl, C₁-C₄-Hydroxyalkyl oder C₁-C₄-Aminoalkyl substituiert ist.

Bevorzugt sind Farbstoffe worin
- R¹: H, CH₃, C₂H₄OH, C₂H₄NH₂, Phenyl, 3- oder 4-Sulfophenyl, 3- oder 4-Carboxyphenyl, Acetyl, Propionyl, Benzoyl oder Maleinyl bedeutet.

Beispiele für Aminreste -NR⁷R⁸ sind
NH₂, NHCH₃, N(CH₃)₂, N(C₂H₅)₂, NHC₂H₅,
NHCH₂CH₂OH, NHCH₂CH₂OCH₃, N(C₂H₄OH)₂, 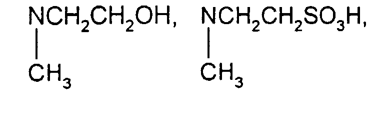 NHCH₂CH₃, 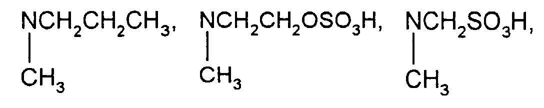 HNCH₂CH₂OSO₃H, NHCH₂CH₂SO₃H, NHCH(CH₃)₂, 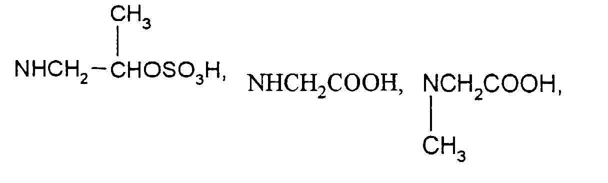 NHCH₂CH₂COOH, N(C₂H₄OSO₃H)₂, NH(CH₂)₁₀COOH,
NH(CH₂CH₂NH)ₚ-CH₂CH₂NH₂, p=0-4, NHCH₂CH₂CH₂N(CH₃)CH₂CH₂OH,

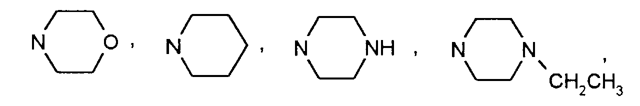

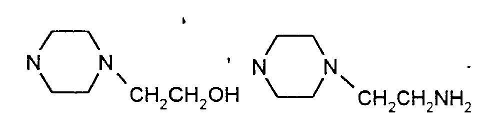

Bevorzugt sind Farbstoffe der Formel (I),
worin
- R: für NHR², -CH=CH-R³, -CH₂-CH₂-R³ oder 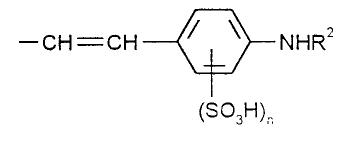 steht,
- R¹: für H, CH₃, C₂H₄OH, C₂H₄NH₂, Phenyl, 3- oder 4-Sulfophenyl, 3- oder 4-Carboxyphenyl, Acetyl, Propionyl, Benzoyl oder Maleinyl steht,
- W: für einen Rest der Formel 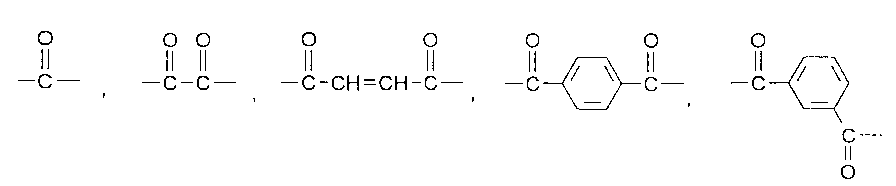 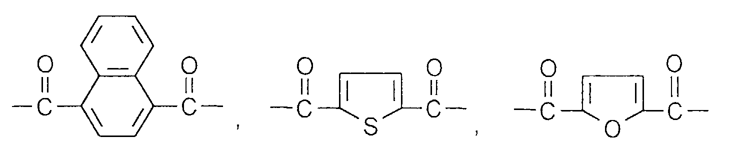 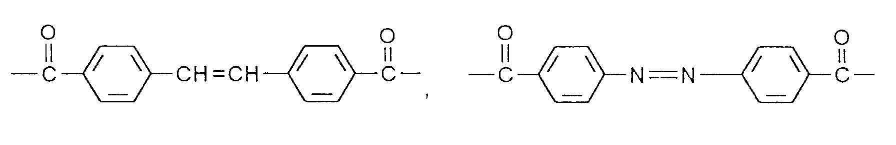 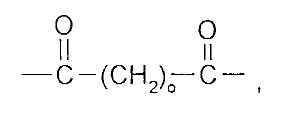 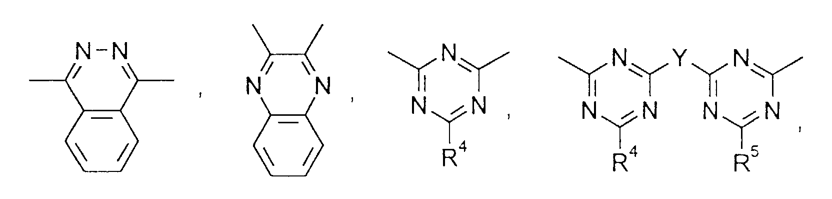 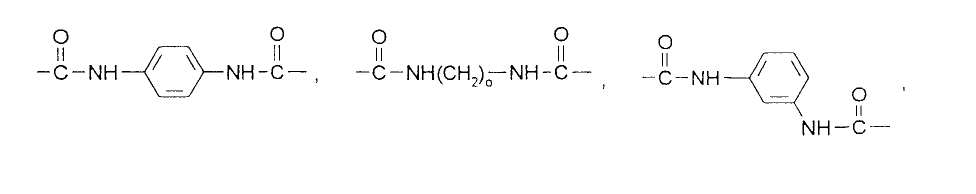 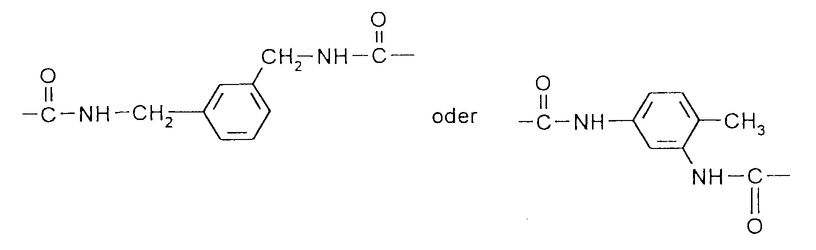 steht,
wobei
- o: für 1 bis 6 steht,
- Y: für einen Rest der Formel 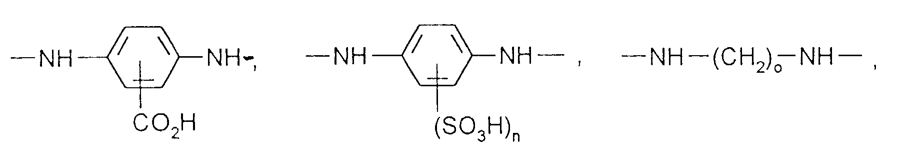 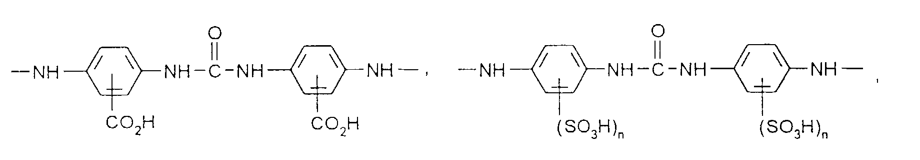 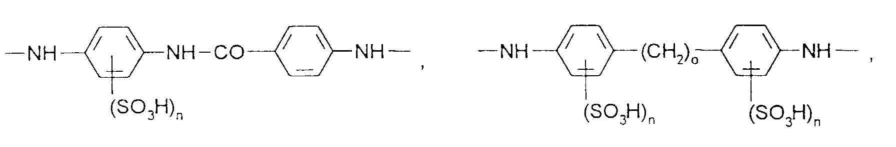 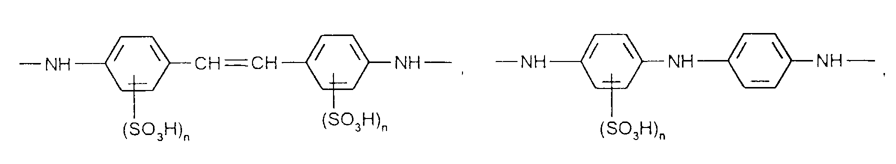 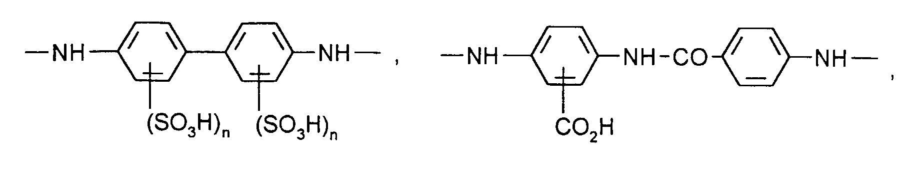 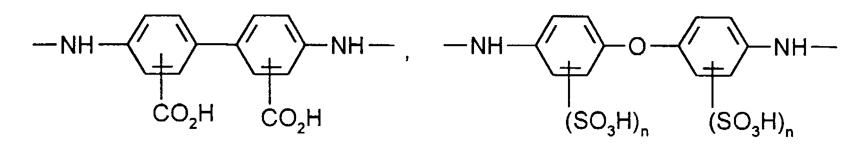 oder 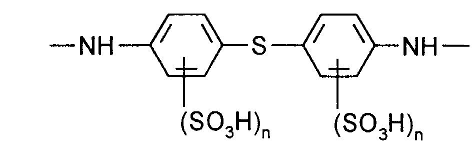 steht,
wobei
- o: für 1 bis 6 steht und
- n: jeweils unabhängig voneinander für 0 oder 1 steht, und die Summe aller n ≥ 2 ist,
und
- R⁴ und R⁵: unabhängig voneinander für Fluor, Chlor, Brom oder eine gegebenenfalls substituierte Aminogruppe der Formel

NR⁷R⁸

stehen, worin
R⁷ und R⁸ unabhängig voneinander für Wasserstoff, einen aliphatischen, aromatischen, araliphatischen oder cycloaliphatischen Rest stehen.

Besonders bevorzugt sind Farbstoffe der Formel (I),
worin
- W: für 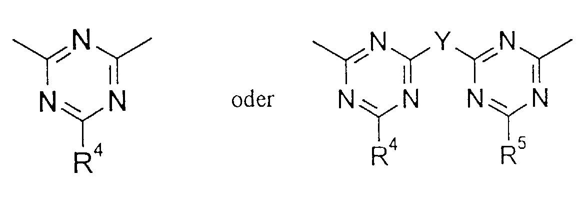
und
- Y: für 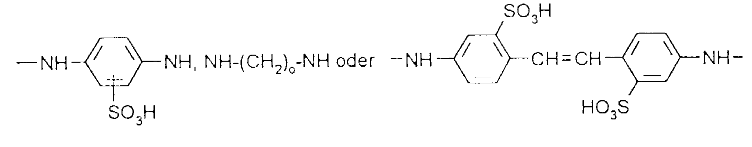 steht,
wobei o für 1 bis 6 steht,
und
R⁴ und R⁵ die oben angegebene Bedeutung haben.

Die Herstellung der Farbstoffe (I) mit R=NHR² und 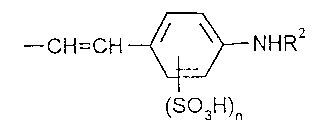 erfolgt in an sich bekannter Weise durch Umsetzung der Farbbase der Formel (IIa) oder (IIb) 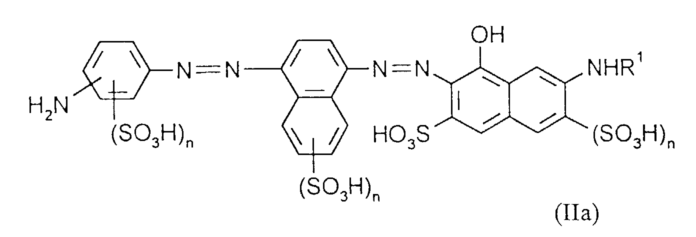 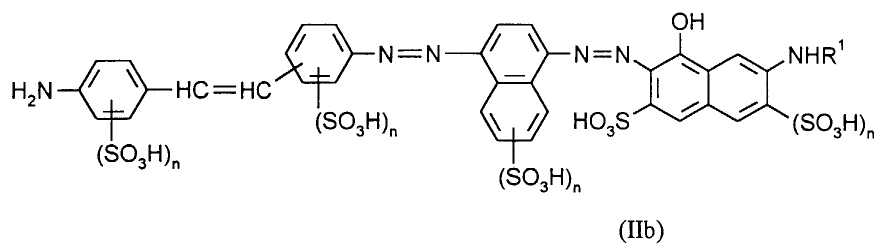 worin n und R¹ die oben angegebene Bedeutung haben, mit einer Verbindung der Formel

Hal-W-NHR³ (III)

worin Hal für Chlor, Brom oder Fluor steht und
R³, W und Y die oben angegebene Bedeutung haben.

Die Kondensation der Farbbase (IIa) oder (IIb) mit (III) erfolgt vorzugsweise im wäßrigen oder wäßrig-organischen Medium bei Temperaturen von 20-60°C, wobei gegebenenfalls die bei der Kondensation freiwerdende Halogenwasserstoffsäure durch Zugabe von säurebindenden Mitteln abgefangen wird.

Bei der Umsetzung mit Halogentriazinhaltigen Bruchstücken kann in einer weiteren Kondensation Halogen gegen Aminreste der Formel HR⁴, oder HR⁵ ausgetauscht werden. Diese Kondensation wird ebenfalls im wäßrigen oder wäßrig-organischen Medium bei Temperaturen von 60-100°C ausgeführt, wobei der bei der Kondensation freiwerdende Halogenwasserstoff durch Zugabe von säurebindenden Mitteln neutralisiert wird. Säurebindende Mittel sind neben Alkali- oder Erdalkalihydrogencarbonaten, -carbonaten, -hydroxiden, -phosphaten oder -boraten auch Amine der Formel HNR⁷R⁸, die im Überschuß eingesetzt werden. Daneben können auch tertiäre Amine wie Triethylamin oder Pyridinbasen wie Pyridin, Picolin oder Cholin verwendet werden.

Die Herstellung der Farbstoffe (I) mit R = -CH=CH-R³ und -CH₂-CH₂-R³ erfolgt durch Tetrazotierung der Amine (V) 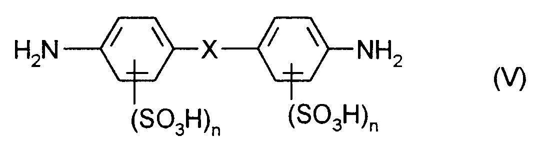 worin
- n: jeweils unabhängig voneinander für 0 oder 1 und
- x: für -CH=CH- oder -CH₂-CH₂-steht,
und Kupplung auf Verbindungen (VI) 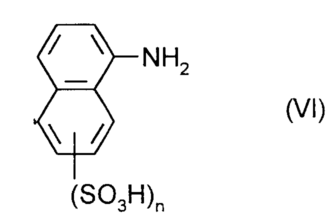 worin n 0 oder 1 bedeutet
und anschließender Weitertetrazotierung und Kupplung auf (VII) 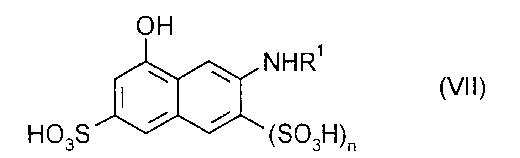 worin n und R¹ die oben angegebene Bedeutung haben.

Die Farbstoffe der Formel (I) färben cellulosehaltige Materialien, insbesondere Papier, Baumwolle und Viskose sowie Leder mit guten Naß- und Lichtechtheiten.

Die Farbstoffe können nach allen in der Papier- und Textilindustrie für substantive Farbstoffe gebräuchlichen Verfahren verwendet werden, insbesondere in der Massen- wie in der Oberflächenfärbung von Papier für geleimte oder ungeleimte Sorten, ausgehend von gebleichten oder ungebleichten Zellstoff verschiedener Provenienz wie Nadel- oder Laubholz-sulfit- und/oder -sulfat-Zellstoff. Sie können auch in der Garn- und Stückfärberei von Baumwolle, Viskose und Leinen nach dem Ausziehverfahren aus langer Flotte oder in Kontinueverfahren angewandt werden.

Weiterer Gegenstand der Erfindung ist ein Verfahren zum Färben von cellulosehaltigen Materialien mit den Farbstoffen der Formel (I).

Die Verbindungen der Formel (I) können auch in Form von Farbstoffpräparationen eingesetzt werden. Diese Anwendungsform ist insbesondere beim Färben von Papier bevorzugt. Die Verarbeitung in stabile flüssige, wäßrige, konzentrierte Färbepräparate kann auf allgemein bekannte Weise erfolgen, durch Lösen in Wasser, gegebenenfalls unter Zugabe eines oder mehrerer Hilfsmittel, z. B. einer hydrotropen Verbindung oder eines Stabilisators. Von besonderem Vorteil ist die Herstellungsmöglichkeit solcher stabilen, wäßrig-konzentrierten Präparationen im Zuge der Farbstoffsynthese selbst ohne Zwischenisolierung des Farbstoffes.

Gegenstand der vorliegenden Erfindung sind weiterhin flüssige Farbstoffpräparationen enthaltend mindestens einen Farbstoff (I), ein Lösungsmittel sowie gegebenenfalls Hilfsmittel.

Geeignete hydrotrope Hilfsmittel sind beispielsweise niedermolekulare Amide, Laktone, Alkohole, Glykole oder Polyole, niedermolekulare Äther oder Oxyalkylierungsprodukte sowie Nitrile oder Ester; in Betracht kommen dabei bevorzugt Methanol, Äthanol, Propanol; Äthylen-, Propylen-, Diäthylen-, Thiodiäthylen- und Dipropylen-glykol; Butandiol, Hydroxypropionitril, Pentamethylenglykol, Äthylenglykolmonoäthyl- und -propyläther, Äthylendiglykolmonoäthyläther, Triäthylenglykolmonobutyläther, Butylpolyglykol, Formamid, Dimethylformamid, Pyrrolidon, N-Methylpyrrolidon, Glykolacetat, Butyrolakton, Harnstoff und Caprolactam.

Die erfindungsgemäßen Farbstoffe der Formel (I) eignen sich weiterhin zur Herstellung von Drucktinten, die insbesondere auch als Aufzeichnungsflüssigkeiten im Ink-Jet-Verfahren eingesetzt werden können.

Weiterer Gegenstand der Erfindung sind Drucktinten enthaltend mindestens einen Farbstoff (I) sowie deren Verwendung als Aufzeichnungsflüssigkeit für Ink-Jet-Aufzeichnungssysteme.

Die Drucktinten enthalten im allgemeinen etwa 1-20 Gew.-% eines oder mehrerer Farbstoffe (I), 80-90 Gew.-% Wasser und/oder polare protische oder dipolare aprotische Lösungsmittel sowie gegebenenfalls weitere übliche Bestandteile.

Bevorzugte Lösungsmittel sind dabei mehrwertige Alkohole und deren Ether oder Ester, Carbonsäureamide, Sulfoxide und Sulfone, insbesondere solche mit Molekulargewichten <200. Besonders geeignete Lösungsmittel sind beispielsweise: Ethylenglykol, Diethylenglykol, Triethylenglykol, 1,5-Pentandiol, Essigsäure-2-hydroxyethylester, Essigsäure-2-(2'-hydroxy)-ethylester, Glycerin, 1,2-Dihydroxypropan, 1-Methoxy-2-propanol, 2-Methoxy-1-propanol, N,N-Dimethylformamid, Pyrrolidon, Caprolactam, N-Methyl-caprolactam, Tetramethylharnstoff, 1,3-Dimethyl-2-imidazolidinon, N,N'-Dimethylpropylenharnstoff Dimethylsulfoxid, Dimethylsulfon, Sulfolan.

Die Drucktinten können durch Auflösen der Salze des Farbstoffes (I) in Wasser und/oder einem oder mehreren der obengenannten organischen Lösungsmitteln gegebenenfalls bei erhöhten Temperaturen und unter Zusatz von anorganischen und organischen Basen oder direkt aus den Kondensationslösungen, die gegebenenfalls einer Entsalzung z. B. durch Druckpermeation unterworfen werden, hergestellt werden. Gegebenenfalls können zusätzlich noch übliche ionische oder nicht-ionische Zusatzstoffe verwendet werden, z. B. solche mit denen die Viskosität erniedrigt und/oder die Oberflächenspannung erhöht werden können.

Anstelle der Salze von (I) können auch die entsprechenden freien Säuren in Kombination mit mindestens äquimolaren Mengen der entsprechenden Basen eingesetzt werden.

Als anorganische Basen können z. B. Lithiumhydroxid, Natriumhydroxid, Kaliumhydroxid, Lithiumcarbonat, Natriumcarbonat, Kaliumcarbonat eingesetzt werden.

Als organische Basen können z. B. Ethanolamin, Diethanolamin, Triethanolamin, N-Methylethanolamin, N,N-Dimethylethanolamin, N-Methyldiethanolamin, 1-Amino-2-propanol, 2-Amino-1-propanol, Di-isopropanolamin, N-2-Hydroxyethyldiisopropanolamin, Tris-N,N,N-[2-(2'-hydroxyethoxy)-ethyl]-amin oder Natriummethylat, Lithiumethylat, Kalium- tert.-butylat dienen.

Bei der Verwendung der erfindungsgemäßen Drucktinten als Aufzeichnungsflüssigkeit für Ink-Jet-Aufzeichnungssysteme ergeben sich folgende Vorteile: Die physikalischen Eigenschaften, wie Viskosität, Oberflächenspannung und dergleichen, liegen in den geeigneten Bereichen; die Aufzeichnungsflüssigkeit verursacht keine Verstopfungen in feinen Abgabeöffnungen von Tintenstrahl-Aufzeichnungsvorrichtungen; sie liefert Bilder von hoher Dichte; bei der Lagerung kommt es in der Aufzeichnungsflüssigkeit nicht zu einer Veränderung von physikalischen Eigenschaften und zur Ablagerung von festen Bestandteilen; die Aufzeichnungsflüssigkeit eignet sich zur Aufzeichnung auf verschiedenen Aufzeichnungsmedien ohne Beschränkungen hinsichtlich der Art der Aufzeichnungsmedien; schließlich fixiert die Aufzeichnungsflüssigkeit rasch und ergibt Bilder mit ausgezeichneter Wasserfestigkeit, Lichtechtheit, Abriebbeständigkeit und Auflösung.

Die folgenden Herstellungsbeispiele sollen die vorliegende Erfindung erläutern ohne sie jedoch darauf zu beschränken. In den Beispielen bedeuten Teile stets Gewichtsteile falls nichts anderes angegeben ist.

Alle λₘₐₓ-Werte sind in Wasser bei pH 10 gemessen.

### Beispiel 1: Herstellung des Farbstoffvorproduktes (A)

46,0 Teile 2-Amino-5-acetylaminobenzolsulfonsäure werden in 500 Teilen Wasser bei einem pH-Wert von 5.0 und bei 50°C gelöst und nach Abkühlung auf Raumtemperatur unter Rühren mit 58 Teilen 30 %iger Salzsäure versetzt. Anschließend werden bei 0 - 5°C 13,8 Teile Natriumnitrit in Form einer 30%igen wässrigen Lösung zugetropft. Nach 0.5 Stunden bei 5 - 10°C wird überschüssiges Nitrit durch Zugabe von wenig Amidosulfonsäure zerstört.

44,6 Teile 8-Amino-naphthalin-2-sulfonsäure werden in 600 Teilen Wasser bei pH 7,5 und 50°C gelöst und anschließend auf Raumtemperatur abgekühlt. Diese Lösung wird bei pH 3,0 zu der nach Absatz 1 erhaltenen Diazoniumsalz-Suspension unter Rühren langsam zugegeben. Anschließend wird der pH Wert auf 5,5 erhöht. Nach 1 Stunde Rühren wird der pH-Wert mit 45%iger Natronlauge auf 7,0 gestellt und mit 500 Teilen Natriumchlorid versetzt. Nach 1 stündigem Rühren wird abgesaugt, mehrmals mit gesättigter Natriumchloridlösung gewaschen und der Nutschkuchen im Vakuum bei 60°C getrocknet.Nach der Trocknung werden 175 Teile salzhaltigen Vorproduktes erhalten.

87,5 Teile dieses Vorproduktes werden in 800 Teilen Wasser bei pH 7,0 und 50°C gelöst und bei Raumtemperatur mit 6,9 Teilen Natriumnitrit in Form einer 30%igen Lösung versetzt. Diese Lösung wird anschließend innerhalb von 0,5 Stunden zu einer Mischung aus 100 Teilen Wasser, 100 Teilen Eis, 58 Teilen 30%iger Salzsäure und 0,1 Teile Natriumnitrit unter Rühren gegeben. Nach 1 Stunde Rühren bei 10 - 15°C wird überschüssiges Nitrit duch Zugabe von wenig Amidosulfonsäure zerstört.

31,9 Teile RR-Säure (1-Naphthol-7-amino-3,6-disulfonsäure) werden in 300 Teilen 20%iger Natriumcarbonat-Lösung gelöst und anschließend innerhalb von 0,25 Stunden mit der nach dem vorherigen Absatz erhaltenen Diazoniumsalz-Suspension unter Rühren versetzt und bei pH 9,3 noch 1,5 Stunden gerührt. Es wird abgesaugt, mit 5%iger Natriumchloridlösung bis zum klaren Ablauf gewaschen.

Der Nutschkuchen wird in 800 Teilen Wasser eingerührt und zur Verseifung der Acetylamino-Gruppe mit 180 Teilen 45%iger Natronlauge versetzt und 1,5 Stunden bei 50°C gerührt. Es wird auf 20°C abgekühlt und bei 20 - 30°C durch Zugabe von 30%iger Salzsäure auf einen pH-Wert von 6,0 eingestellt. Nach 1 Stunde Rühren wird die schwarze Fällung abgesaugt, mit 10%iger Natriumchloridlösung gewaschen und bei 80°C im Vakuum getrocknet. Erhalten werden 60,2 Teile des Natriumsalzes des Farbstoffvorproduktes (A), das in Form seiner freien Säure der folgenden Formel entspricht (NaCl-Gehalt 10,3 %) 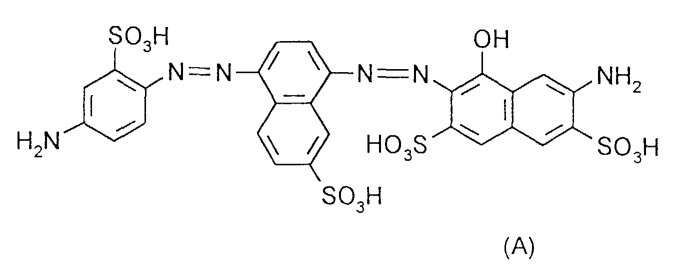 λₘₐₓ: 595, 452 nm

### Beispiel 2: Herstellung des Farbstoffvorproduktes (B)

115 Teile 2-Amino-4-acetylaminobenzolsulfonsäure werden in 1200 Teilen Wasser eingerührt und mit 200 Teilen Eis und 112 Teilen 30%iger Salzsäure versetzt. Anschließend werden bei 0 - 5°C 34,5 Teile Natriumnitrit in Form einer 30%igen wässrigen Lösung zugetropft. Nach 0.5 Stunden bei 5 - 10°C wird ggf. überschüssiges Nitrit durch Zugabe von wenig Amidosulfonsäure zerstört.

113.5 Teile 8-Amino-naphthalin-2-sulfonsäure werden in 1200 Teilen Wasser bei pH 7,5 und 50°C gelöst und anschließend mit 400 Teilen Eis versetzt. Diese Lösung wird zu der nach Absatz 1 erhaltenen Diazoniumsalz-Suspension unter Rühren langsam zugegeben. Anschließend wird der pH-Wert durch Zugabe von 50 Teilen Natriumacetat auf 4,0 erhöht. Nach 1 Stunde Rühren wird der pH-Wert mit 45%iger Natronlauge auf 6,0 gestellt und mit 300 Teilen Natriumchlorid versetzt. Nach 1-stündigem Rühren wird abgesaugt. Der Nutschkuchen wird mit 3000 Teilen Wasser bei 30 - 40°C verrührt und durch Zugabe von etwas 45%iger Natronlauge auf einen pH-Wert von 8,5 gestellt. Es wird mit 600 Teilen Eis und dann mit 225 Teilen 30%iger Salzsäure versetzt. Innerhalb von 0,5 Stunden werden 34,5 Teile Natriumnitrit in Form einer 30%igen Lösung eingetropft. Nach 0,5 Stunden Rühren bei Raumtemperatur wird überschüssiges Nitrit duch Zugabe von wenig Amidosulfonsäure zerstört.

159,6 Teile RR-Säure (1-Naphthol-7-amino-3,6-disulfonsäure) werden in 1200 Teilen 20%iger Natriumcarbonat-Lösung gelöst und anschließend bei Raumtemperatur innerhalb von 0,25 Stunden mit der nach dem vorherigen Absatz erhaltenen Diazoniumsalz-Lösung unter Rühren versetzt und bei pH 9,3 noch 1 Stunde gerührt. Es wird durch Zugabe 30%iger Salzsäure auf pH 7,5 gestellt, abgesaugt und mit 1000 Teilen 10%iger Natriumchloridlösung gewaschen.

Der Nutschkuchen wird in 3000 Teile 70°C heißes Wasser eingerührt und zur Verseifung der Acetylamino-Gruppe mit 1100 Teilen 45%iger Natronlauge versetzt und 1,5 Stunden bei 50-60°C gerührt. Es wird auf 20°C abgekühlt und durch Zugabe von 30%iger Salzsäure auf einen pH-Wert von 6,5 eingestellt. Nach 1 Stunde Rühren wird die schwarze Fällung abgesaugt, mit 10%iger Natriumchloridlösung gewaschen und bei 80°C im Vakuum getrocknet. Erhalten werden 254 Teile des Natriumsalzes des Farbstoffvorproduktes (B), das in Form seiner freien Säure der folgenden Formel entspricht (NaCl-Gehalt: 10,3 %) 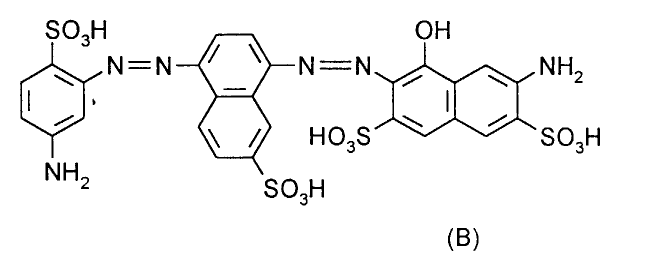 λₘₐₓ: 583, 439 nm

### Beispiel 3 Herstellung des Farbstoffvorproduktes (C)

82,06 Teile 4'-Acetylamino-4-aminostilben-2,2'-disulfonsäure (erhalten durch Acetylierung und anschließende Hydrierung von 4'-Nitro-aminostilben-2,2'-disulfonsäure) werden in ein Gemisch aus 400 Teilen Eis und 800 Teilen Wasser eingerührt, mit 100 Teilen 30%iger Salzsäure versetzt und tropfenweise mit 13,8 Teilen Natriumnitrit in Form einer 30%igen wässrigen Lösung versetzt. Nach 1 Stunde Rühren bei 0 bis 5°C wird überschüssiges Nitrit durch Zugabe von wenig Amidosulfonsäure zerstört.

44,6 Teile 8-Amino-naphthalin-2-sulfonsäure werden in 600 Teilen Wasser bei pH 7,5 und 50°C gelöst und anschließend mit 200 Teilen Eis versetzt. Nach Einstellung eines pH-Wertes von 5,0 wird dieses Gemisch langsam unter Rühren zu der nach Absatz 1 erhaltenen Diazoniumsalz-Suspension zugegeben. Anschließend wird der pH-Wert durch Zugabe von 100 g Natriumacetat auf 4,0 erhöht. Nach 2 Stunden Rühren bei Raumtemperatur wird abgesaugt, zweimal mit Wasser gewaschen und bei 60°C im Vakuum getrocknet. Erhalten werden 144 Teile Vorprodukt.

108,9 Teile dieses Vorproduktes werden in 1000 Teilen Wasser bei pH 8,0 gelöst und mit 10,2 Teilen Natriumnitrit in Form einer 30%igen wässrigen Lösung versetzt. Dieses Gemisch wird innerhalb von 15 Minuten unter Rühren zu einem Gemisch aus 250 Teilen Eis, 250 Teilen Wasser, 0,1 Teilen Natriumnitrit und 115 Teilen 30%iger Salzsäure zulaufen gelassen. Nach 1 Stunde Rühren bei 15 bis 20°C wird überschüssiges Nitrit durch Zugabe von wenig Amidosulfonsäure zerstört.

Die im vorhergegangenen Absatz erhaltene Suspension wird langsam zu einer Lösung von 60,6 Teilen RR-Säure (1-Naphthol-7-amino-3,6-disulfonsäure) in 600 Teilen 20%iger Natriumcarbonat-Lösung gegeben. Der pH-Wert wird durch Zugabe von 15%iger Natronlauge bei 8,5 gehalten. Nach 1 Stunde Rühren bei Raumtemperatur wird durch Zugabe von 200 Teilen Natriumchlorid ausgesalzen. Nach 0,5 Stunden wird abgesaugt und mehrmals mit 10%iger Kochsalzlösung gewaschen. Der feuchte Nutschkuchen wird in 1000 Teilen 80°C heißem Wasser angerührt und nach Zugabe von 370 Teilen 40%iger Natronlauge 2 Stunden bei 80 bis 85°C gerührt. Dann wird nach dem Abkühlen auf Raumtemperatur durch Zugabe von 350 Teilen 30%iger Salzsäure ein pH-Wert von 2,0 eingestellt. Anschließend wird abgesaugt, mit 5%iger Natriumchloridlösung gewaschen und der Nutschkuchen bei 80°C im Vakuum getrocknet. Erhalten werden 102,3 Teile des Natriumsalzes des Farbstoff-Vorproduktes (C) (NaCl-Gehalt 15 %), das in Form seiner freien Säure folgender Formel entspricht: 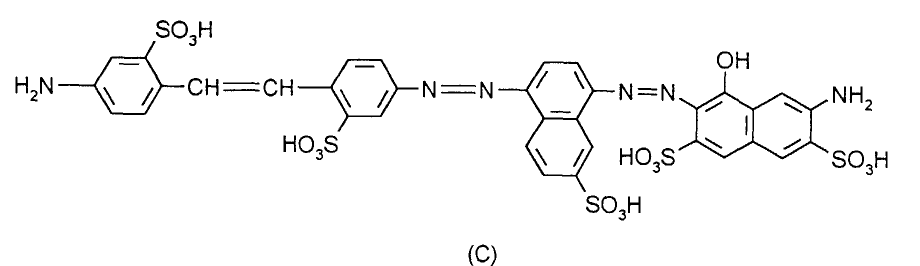 λₘₐₓ: 595, 466 nm

### Beispiel 4

6,1 Teile des nach Beispiel 3 erhaltenen Farbstoff-Vorproduktes (C) ( = 5,2 Teile salzfreies Produkt) werden in 150 Teilen Wasser bei einem pH-Wert von 5,0 gelöst und mit 1 Teil fein zerkleinertem Cyanurchlorid versetzt. Nach 0,5 Stunden Rühren bei Raumtemperatur werden nochmals 6,1 Teile des Vorproduktes (C) zugesetzt und der pH-Wert mit 1N Natronlauge auf 6,5 - 7,5 erhöht. Es wird auf 40 - 45°C erwärmt, 1 Stunde bei dieser Temperatur gehalten und dann noch 0,5 Stunden bei 60°C gerührt. Es werden 3,5 Teile Pentaethylenhexamin zugesetzt und die Temperatur auf 80°C erhöht. Nach weiteren 0,5 Stunden wird auf Raumtemperatur abgekühlt und durch Zugabe von 30%iger Salzsäure der pH-Wert auf 7,0 gestellt. Nach 1 Stunde Rühren, wird abgesaugt, mit Wasser gewaschen und bei 80°C im Vakuum getrocknet. Es werden 10,1 Teile eines erfindungsgemäßen Farbstoffs erhalten, der in Form seiner freien Säure der folgenden Formel entspricht 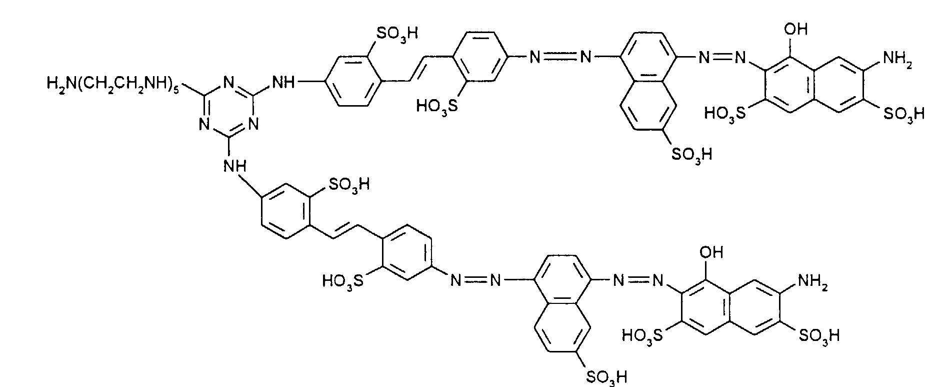 λₘₐₓ: 602, 471 nm

5 Teile dieses Farbstoffs werden in 80 Teilen Wasser eingerührt und der pH-Wert durch Zugabe von 2N Natronlauge auf 10,0 gestellt. Durch Zugabe von Wasser wird eine Gesamtmenge von 100 Teilen eingestellt, so daß eine ca. 5%ige erfindungsgemäße Flüssigformierung des obigen Farbstoffs erhalten wird. Diese kann zur Herstellung von Aufzeichnungsflüssigkeiten verwandt werden, die ebenfalls sehr echte schwarze Drucke ermöglichen.

Ersetzt man im obigen Beispiel die 3,5 Teile Pentaethylenhexamin durch 1,5 Teile Triethylentetramin, so erhält man einen Farbstoff mit vergleichbaren Eigenschaften.

### Beispiel 5

30 Teile der nach Beispiel 4 erhaltenen Flüssigformierung (Farbstoffgehalt ca. 5 %) werden mit einem Gemisch aus 61 Teilen Wasser und 9 Teilen Diethylenglykol verdünnt. Die so erhaltene Aufzeichnungsflüssigkeit mit einem Farbstoffgehalt von ca. 1,5 % liefert mittels eines Hewlett-Packard DeskJet-Druckers (DeskJet ist ein eingetragenes Warenzeichen der Hewlett-Packard Company, USA) auf üblichen Schreibpapieren Drucke in licht- und naßechten Schwarz-Tönen.

### Beispiel 6

1 Teil fein zerkleinertes Cyanurchlorid wird in 150 Teilen Wasser bei 0 - 5°C eingerührt. Anschließend werden 4,7 Teile des nach Beispiel 2 erhaltenen Farbstoff-Vorproduktes (B) (= 4,2 Teile salzfreies Produkt) zugesetzt. Nach 0,5 Stunden Rühren bei -5°C und pH 3,5 - 4,0 werden 6,1 Teile des Vorproduktes (C) nach Beispiel 8 zugesetzt und der pH-Wert mit 1N Natronlauge auf 7,0 - 7,5 erhöht. Es wird auf 40°C erwärmt und noch 1 Stunde bei dieser Temperatur gehalten. Es werden 2,3 Teile Pentaethylenhexamin zugesetzt und die Temperatur auf 60°C erhöht. Nach weiteren 0,5 Stunden bei 60°C wird auf Raumtemperatur abgekühlt und durch Zugabe von 30%iger Salzsäure der pH-Wert auf 7,0 gestellt. Nach 1 Stunde Rühren, wird abgesaugt, mit Wasser gewaschen und bei 80°C im Vakuum getrocknet.Es werden 12,1 Teile eines erfindungsgemäßen Farbstoffs erhalten, der in Form seiner freien Säure der folgenden Formel entspricht 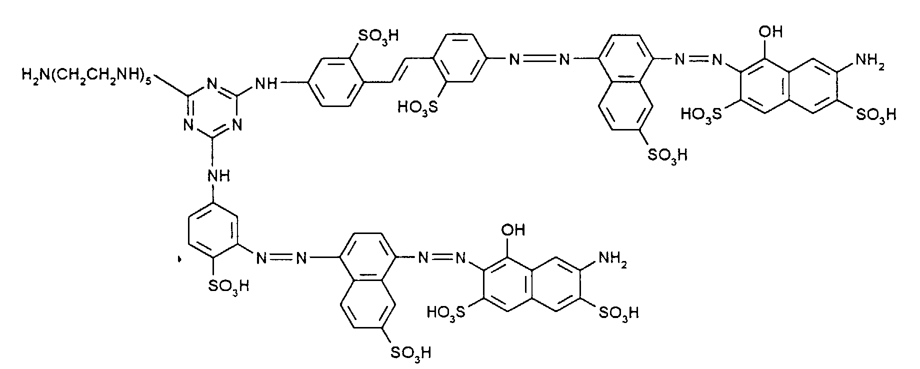 λₘₐₓ: 605, 466 nm

5 Teile dieses Farbstoffs werden in 80 Teilen Wasser eingerührt und der pH-Wert durch Zugabe von 2N Natronlauge auf 9,5 gestellt. Durch Zugabe von Wasser wird ein Gesamtgewicht von 100 Teilen eingestellt, so daß eine ca. 5%ige erfindungsgemäße Flüssigformierung des obigen Farbstoffs erhalten wird. Diese kann analog Beispiel 4 zur Herstellung von Aufzeichnungsflüssigkeiten nach Beispiel 5 verwandt werden, die ebenfalls sehr echte schwarze Drucke ermöglichen.

Einen ähnlichen Farbstoff erhält man, wenn man die im obigen Beispiel verwandten 2,3 Teile Pentaethylenhexamin durch 1,2 Teile N-(2-Hydroxyethyl)-1,3-propandiamin ersetzt.

Ersetzt man im obigen Beispiel Absatz 1 die 6,1 Teile des Farbstoffvorproduktes (B) durch 6,1 Teile des Farbstoffvorproduktes (A) nach Beispiel 1 und verfährt sonst wie im Absatz 1 angegeben, so erhält man einen Farbstoff mit vergleichbaren Eigenschaften.

### Beispiel 7

Ersetzt man die im letzten Absatz des Beispiel 6 zu verwendende Menge von 2,3 Teilen Pentaethylenhexamin durch 1,2 Teile N-(2-Hydroxyethyl)-1,3-propandiamin und verfährt sonst analog, so erhält man einen Farbstoff, der in Form seiner freien Säure der folgenden Formel entspricht 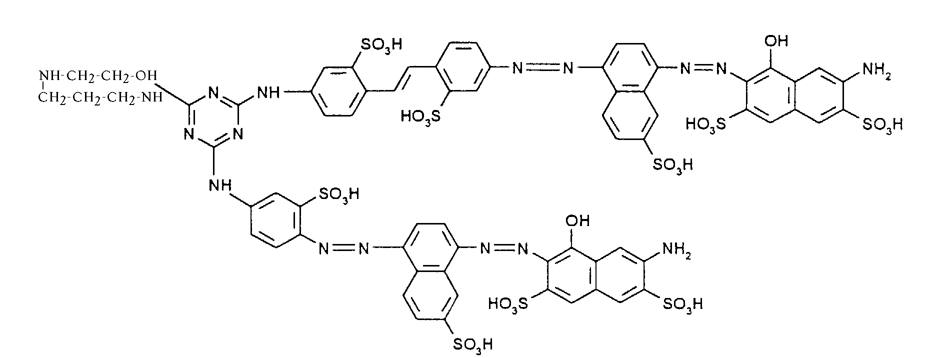 λₘₐₓ: 607, 468 nm

Auch dieser Farbstoff läßt sich nach obigen Angaben bei pH 9,5 problemlos in eine stabile 5%ige Flüssigformierung überführen, die in Aufzeichnungsflüssigkeiten eingebracht tiefschwarze INKJET-Drucke mit guten Naßechtheiten ermöglicht.

### Beispiel 8

4,0 Teile fein zerkleinertes Cyanurchlorid und 1 Tropfen handelsüblicher Emulgator werden in 300 Teilen Wasser und 200 Teilen Eis bei 0 - 5°C dispergiert. Anschließend werden 8,2 Teile 4,4'-Diaminostilben-2,2'-disulfonsäure in Form einer 18%igen Lösung des Dinatriumsalzes innerhalb von 1,5 Stunden eingetropft und der pH-Wert zunächst durch Zugabe von 2N-Salzsäure bei 2,0 - 2,5 gehalten. Im weiteren Verlauf erfolgt die Konstanthaltung des pH-Wertes durch tropfenweise Zugabe von 2N Natronlauge. Es wird noch 0,25 Stunden bei 15°C gerührt und dann erfolgt die Zugabe von 18,5 Teilen des nach Beispiel 1 erhaltenen Vorproduktes (A). Der pH-Wert wird bei 6,5 bis 7,2 gehalten und die Temperatur jeweils für 1 Stunde auf 20 - 30°C und 40°C erhöht. Nach 4,5 Stunden bei 60°C werden 7,7 Teile Pentaethylenhexamin zugegeben, die Temperatur auf 80°C erhöht und 1,5 Stunden bei dieser Temperatur und pH 9,5 gerührt. Es wird auf Raumtemperatur abgekühlt, der pH-Wert durch Zugabe von 30%iger Salzsäure auf 6,0 gestellt. Der ausgefallene Farbstoff wird abgesaugt, mit Wasser gewaschen und bei 80°C im Vakuum getrocknet.Es werden 27 Teile eines erfindungsgemäßen Farbstoffs erhalten, der in Form seiner freien Säure der folgenden Formel entspricht 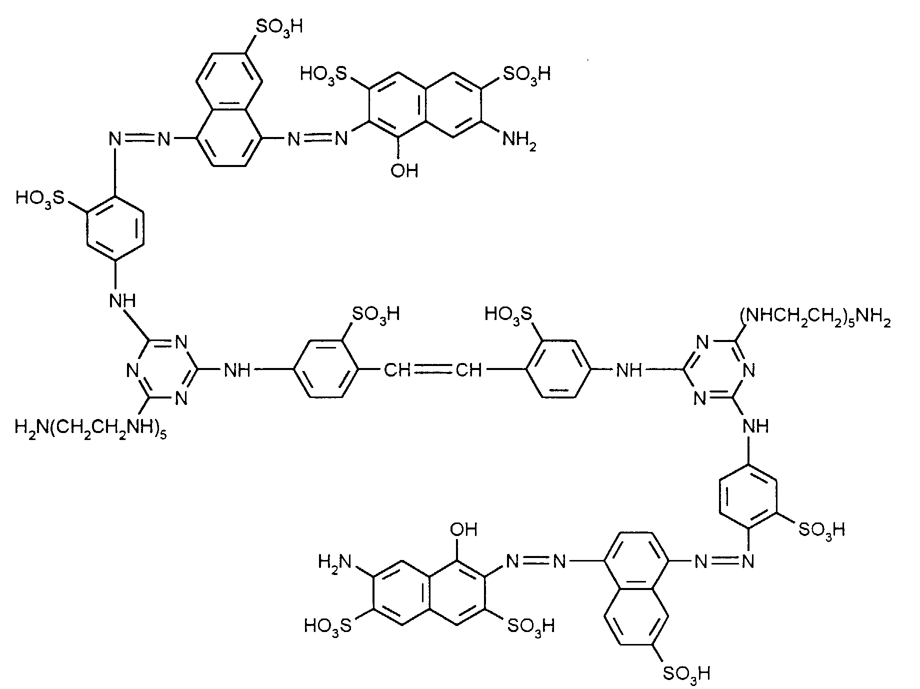 λₘₐₓ: 614, 454 nm

5 Teile dieses Farbstoffs werden in 80 Teilen Wasser eingerührt und der pH-Wert durch Zugabe von 2N Natronlauge auf 10,0 gestellt. Durch Zugabe von Wasser wird ein Gesamtgewicht von 100 Teilen eingestellt, so daß eine ca. 5%ige erfindungsgemäße Flüssigformierung des obigen Farbstoffs erhalten wird. Diese kann analog Beispiel 4 zur Herstellung von Aufzeichnungsflüssigkeiten nach Beispiel 5 verwandt werden, die im INKJET Drucke mit tiefen, naßechten Tönen ermöglichen.

### Beispiel 9

4,4 Teile des nach Beispiel 4 erhaltenen Farbstoffs werden in 400 Teilen Wasser dispergiert, mit 2N NaOH auf pH 9,0 gestellt und mit 0,4 Teilen Maleinsäureanhydrid versetzt. Es wird 2 Stunden bei Raumtemperatur und 0,5 Stunden bei 40°C gerührt. Durch Zugabe von 2N Salzsäure wird der pH-Wert auf 2,0 gestellt. Der ausgefallene schwarze Farbstoff wird abgesaugt, mit Wasser gewaschen und bei 80°C im Vakuum getrocknet. Es werden 4,0 Teile eines erfindungsgemäßen Farbstoffs erhalten, der in Form seiner freien Säure wahrscheinlich der folgenden Formel entspricht 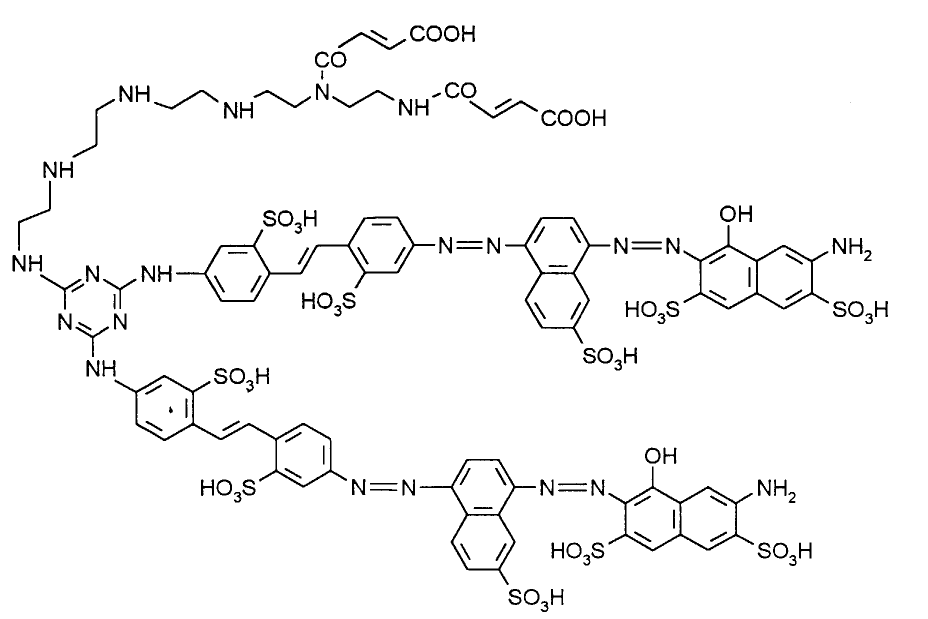 λₘₐₓ: 603, 466 nm

2,5 Teile dieses Farbstoffs werden in 40 Teilen Wasser eingerührt und der pH-Wert durch Zugabe von 2N Natronlauge auf 9,0 gestellt. Durch Zugabe von Wasser wird ein Gesamtgewicht von 50 Teilen eingestellt, so daß eine ca. 5%ige erfindungsgemäße Flüssigformierung des obigen Farbstoffs erhalten wird. Diese kann zur Herstellung einer Aufzeichnungsflüssigkeit nach Beispiel 5 verwandt werden, die ebenfalls echte schwarze Drucke ermöglicht

### Beispiel 10

Verwendet man in Beispiel 3 anstelle von 4'-Acetylamino-4-aminostilben-2,2'-disulfonsäure die entsprechende 4-Amino-4'-acetylamino-stilben-2-sulfonsäure, so erhält man das Farbstoffzwischenprodukt (D), das in Form der freien Säure folgende Formel entspricht: 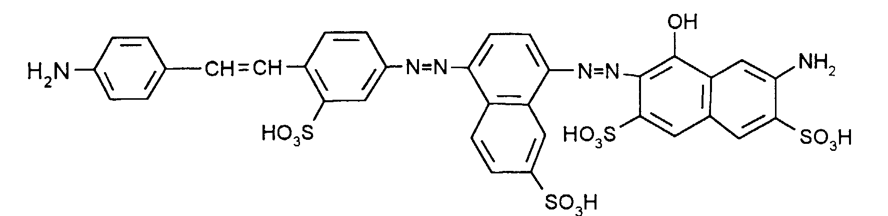 λₘₐₓ: 608, 463 nm

### Beispiel 11

8,3 Teile des nach Beispiel 10 erhaltenen Farbstoff-Vorproduktes (D) (= 4,8 Teile salzfreies Produkt) werden in 150 Teilen Wasser bei einem pH-Wert von 5,0 gelöst und mit 1 Teil fein zerkleinertem Cyanurchlorid versetzt. Nach 0,5 Stunden Rühren bei Raumtemperatur werden nochmals 8,3 Teile des Vorproduktes (D) zugesetzt und der pH-Wert mit 1N Natronlauge auf 6,5-7,0 erhöht.

Es wird auf 40 - 45°C erwärmt, 1 Stunde bei dieser Temperatur gehalten und dann noch 0,5 Stunden bei 60°C gerührt. Es werden 3,5 Teile Pentaethylentetramin zugesetzt und die Temperatur auf 80°C erhöht. Nach weiteren 0,5 Stunden wird auf Raumtemperatur abgekühlt und durch Zugabe von 30%iger Salzsäure der pH-Wert auf 7,0 gestellt. Nach 1 Stunde Rühren, wird abgesaugt, mit Wasser gewaschen und bei 80°C im Vakuum getrocknet. Es werden 10,1 Teile eines erfindungsgemäßen Farbstoffs erhalten, der in Form seiner freien Säure der folgenden Formel entspricht; 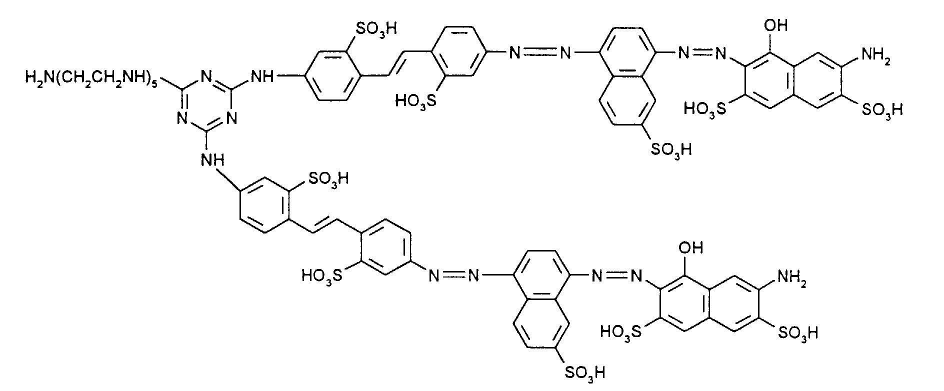 λₘₐₓ: 605, 463 nm

5 Teile dieses Farbstoffs werden in 80 Teilen Wasser eingerührt und der pH-Wert durch Zugabe von 2N Natronlauge auf 10,0 gestellt. Durch Zugabe von Wasser wird ein Gesamtgewicht von 100 Teilen eingestellt, so daß eine ca. 5%ige erfindungsgemäße Flüssigformierung des obigen Farbstoffs erhalten wird. Diese kann analog Beispiel 4 zur Herstellung von Aufzeichnungsflüssigkeiten nach Beispiel 5 verwandt werden, die ebenfalls sehr echte schwarze Drucke ermöglichen.

Ersetzt man im obigen Beispiel die 3,5 Teile Pentaethylenhexamin durch 1,5 Teile Triethylentetramin, so erhält man einen Farbstoff mit vergleichbaren Eigenschaften.

### Beispiel 12

4,0 Teile des nach Beispiel 11 erhaltenen Farbstoffes werden analog Beispiel 9 mit 0,4 Teilen Maleinsäureanhydrid umgesetzt.

Es werden 4,0 Teile eines erfindungsgemäßen Farbstoffs erhalten, der in Form seiner freien Säure wahrscheinlich der folgenden Formel entspricht 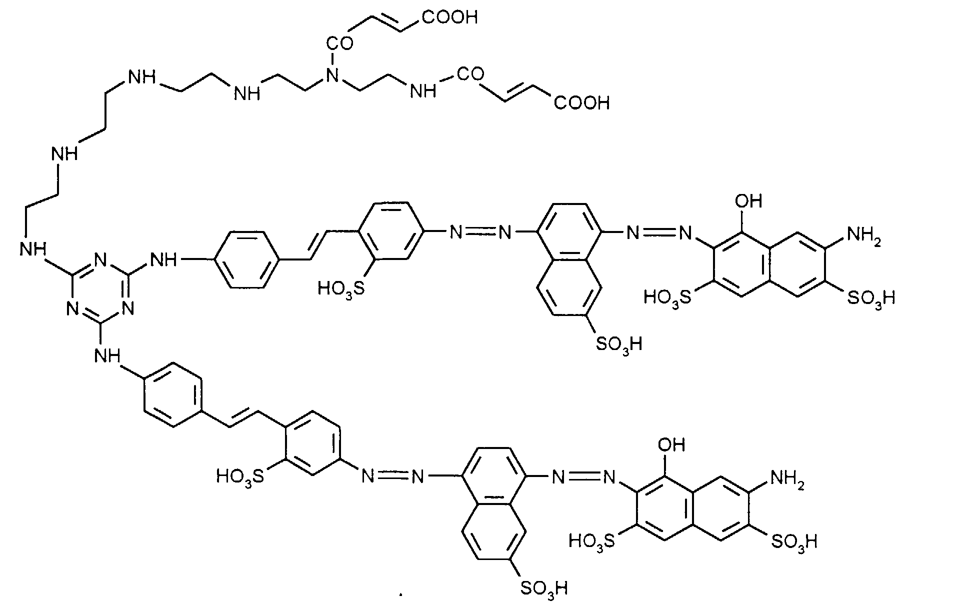 λₘₐₓ: 606, 460 nm

2,5 Teile dieses Farbstoffs werden in 40 Teilen Wasser eingerührt und der pH-Wert durch Zugabe von 2N Natronlauge auf 9,0 gestellt. Durch Zugabe von Wasser wird ein Gesamtgewicht von 50 Teilen eingestellt, so daß eine ca. 5%ige erfindungsgemäße Flüssigformierung des obigen Farbstoffs erhalten wird. Diese kann zur Herstellung einer Aufzeichnungsflüssigkeit nach Beispiel 5 verwandt werden, die ebenfalls echte schwarze Drucke ermöglicht

## Patentansprüche

1. Farbstoffe der Formel (I) 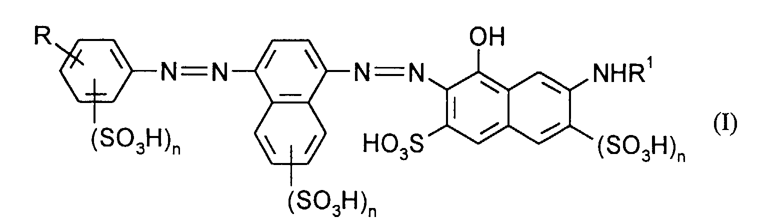 worin
R für NHR², -CH=CH-R³, -CH₂-CH₂-R³ oder 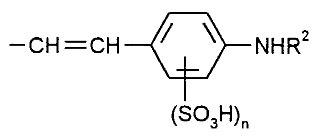 steht,
R¹ für Wasserstoff, gegebenenfalls substituiertes C₁-C₄ Alkyl, gegebenenfalls substituiertes C₁-C₄ Alkylcarbonyl, gegebenenfalls substituiertes Phenyl oder gegebenenfalls substituiertes Phenylcarbonyl steht
R² für -W-NHR³ steht,
worin
W für ein Brückenglied steht,
R³ für 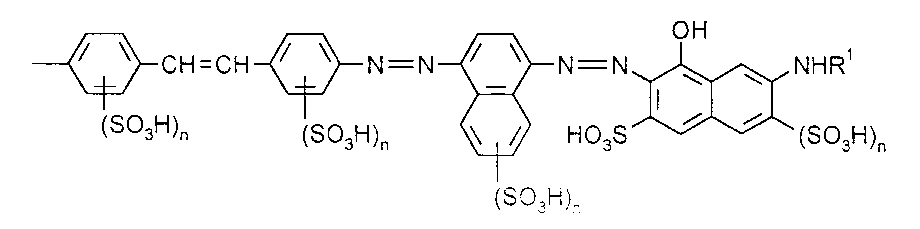 und n jeweils unabhängig voneinander für 0 oder 1 steht.

2. Farbstoffe des Anspruchs 1, worin
W für 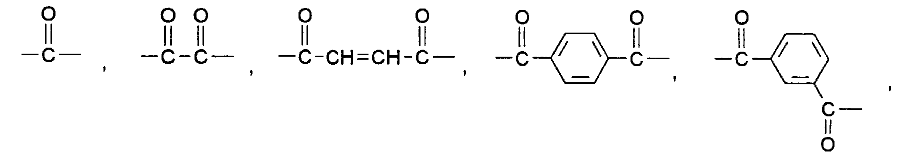 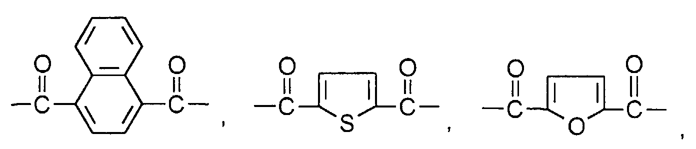 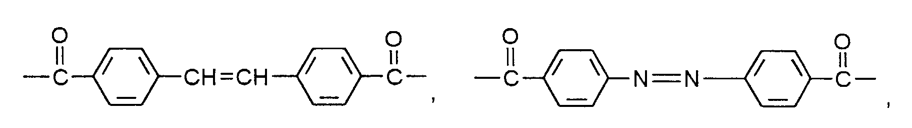 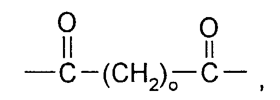 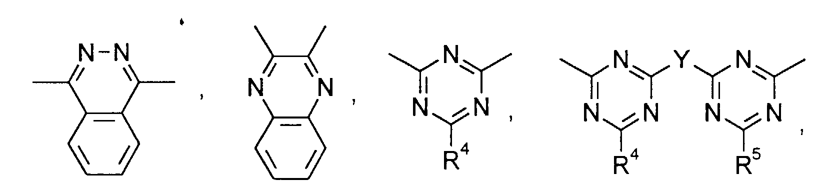 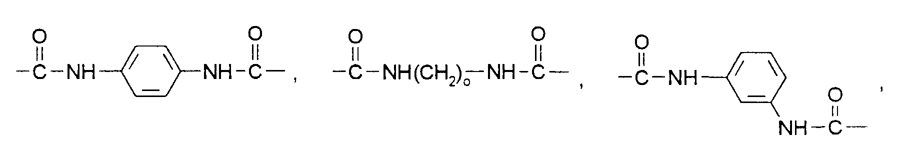 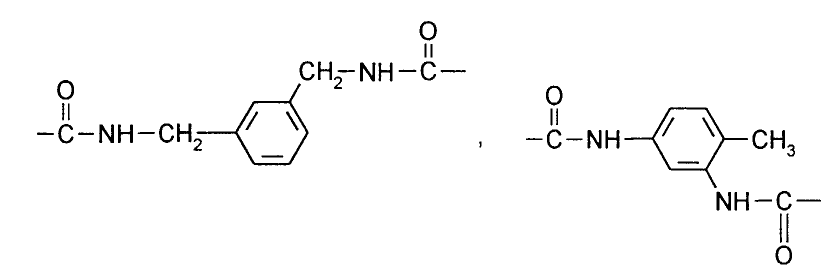 steht,
wobei
R⁴, R⁵ unabhängig voneinander für Halogen, Hydroxy, C₁-C₆-Alkoxy, C₁-C₆-Alkyl oder eine gegebenenfalls substituierte Aminogruppe stehen und
o für 1 bis 6 steht
und
Y für 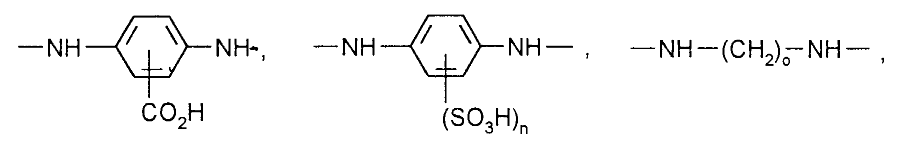 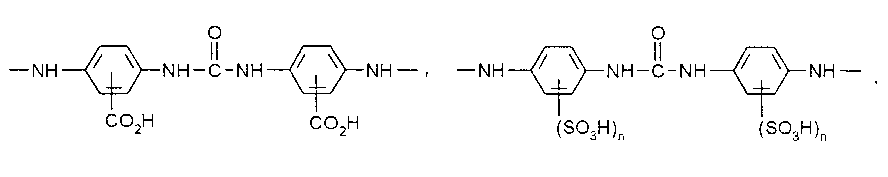 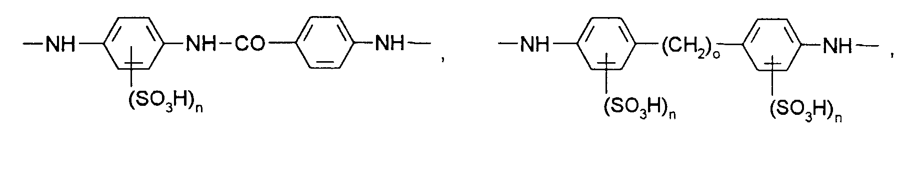 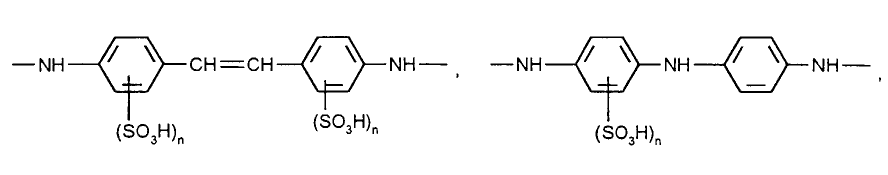 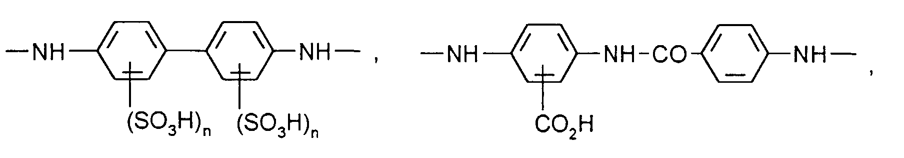 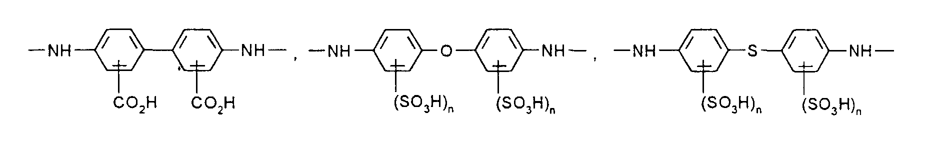 steht,
wobei
o für 1 bis 6 steht und
n jeweils unabhängig voneinander für 0 oder 1 steht.

3. Farbstoffe gemäß Ansprüchen 1 und 2,
worin
R⁴ und R⁵ unabhängig voneinander für Halogen, insbesondere Fluor, Chlor oder Brom, oder eine gegebenenfalls substituierte Aminogruppe der Formel
-NR⁷R⁸,
worin
R⁷ und R⁸ unabhängig voneinander für Wasserstoff, einen aliphatischen, aromatischen, araliphatischen oder cycloaliphatischen Rest stehen,
R⁸ außerdem auch für Hydroxy, C₁-C₄-Alkoxy, Amino, Phenylamino oder C₁-C₄-Alkoxyamino steht,
oder
R⁷ und R⁸ zusammen mit dem Stickstoffatom an das sie gebunden sind einen 3- bis 8-gliedrigen, vorzugsweise 5- bis 7-gliedrigen, gesättigten oder ungesättigten Ring bilden, der gegebenenfalls 1 oder 2 weitere Heteroatome aus der Reihe Sauerstoff, Schwefel, Stickstoff enthält, und der gegebenenfalls durch C₁-C₄-Alkyl, C₁-C₄-Hydroxyalkyl oder C₁-C₄-Aminoalkyl substituiert ist,
stehen.

4. Farbstoffe gemäß Ansprüchen 1 bis 3
worin
R für NHR², -CH=CH-R³, -CH₂-CH₂-R³ oder 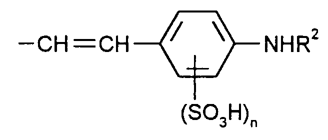 steht,
R¹ für H, CH₃, C₂H₄OH, C₂H₄NH₂, Phenyl, 3- oder 4-Sulfophenyl, 3-oder 4-Carboxyphenyl, Acetyl, Propionyl, Benzoyl oder Maleinyl steht,
W für einen Rest der Formel 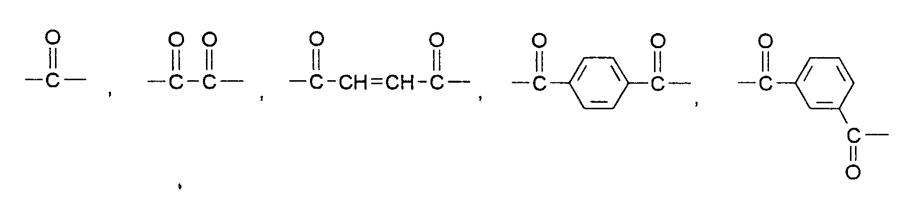 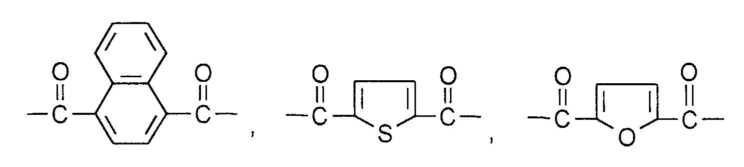 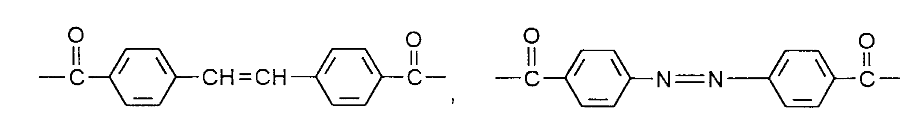 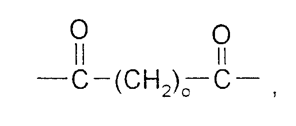 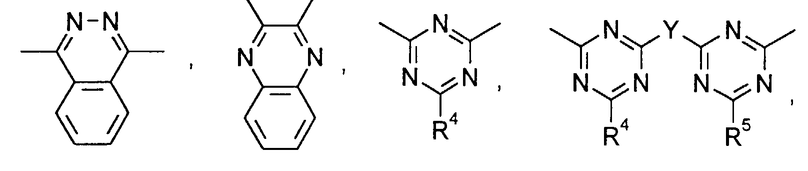 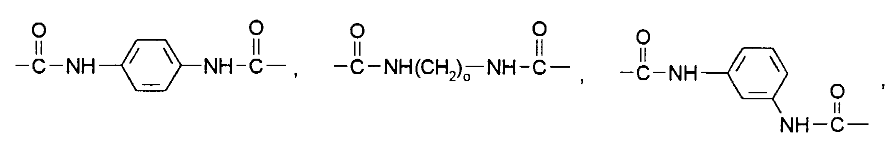 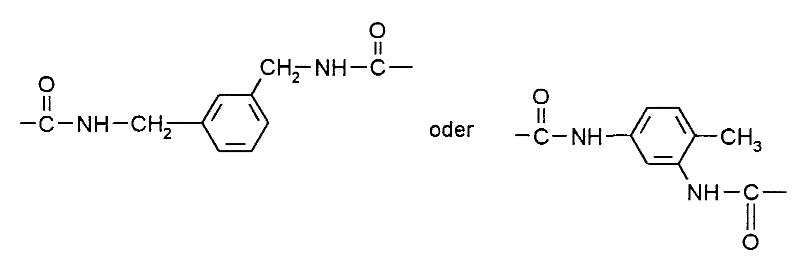 steht,
wobei
o für 1 bis 6 steht,
Y für einen Rest der Formel 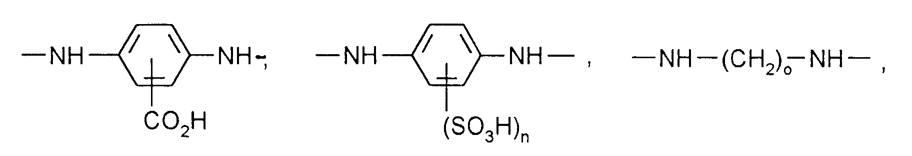 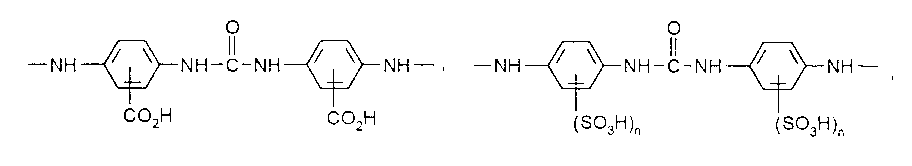 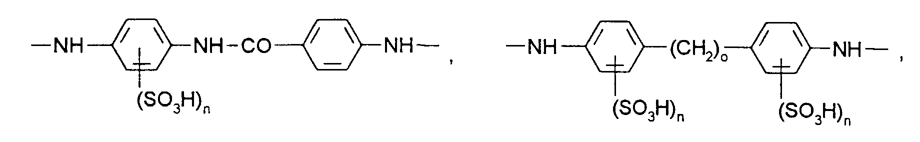 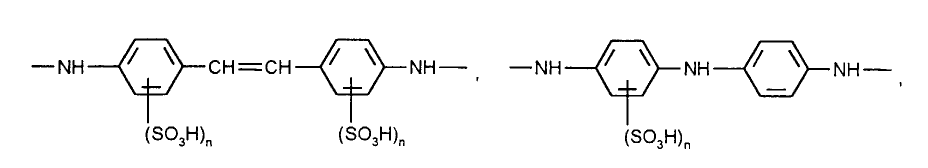 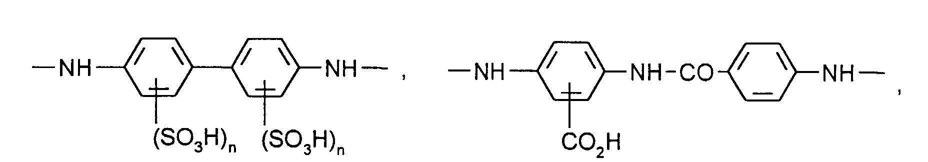 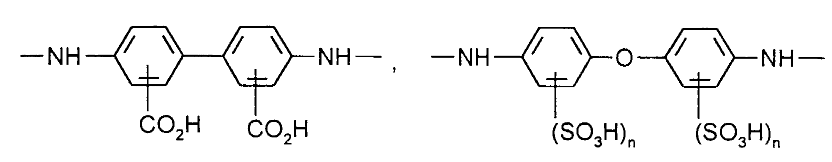 oder 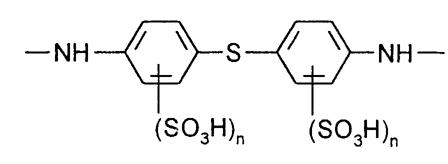 steht,
wobei
o für 1 bis 6 steht und
n jeweils unabhängig voneinander für 0 oder 1 steht, und die Summe aller n ≥ 2 ist,
und
R⁴ und R⁵ unabhängig voneinander für Fluor, Chlor, Brom oder eine gegebenenfalls substituierte Aminogruppe der Formel
NR⁷R⁸
stehen, worin
R⁷ und R⁸ unabhängig voneinander für Wasserstoff oder für gegebenenfalls durch Carboxy, Hydroxy, C₁-C₄-Alkoxy, Amino oder Sulfo substituiertes C₁-C₆-Alkyl oder für Phenyl-C₁-C₄-alkyl stehen,
R⁸ außerdem für einen durch ein Polyalkylenpolyamin substituierten Ethylrest, vorzugsweise für einen Rest -CH₂CH₂-(NCH₂CH₂)₁₋₄-NH₂ steht,
oder
R⁷ und R⁸ gemeinsam mit dem Stickstoffatom an welches sie gebunden sind einen gesättigten 5- oder 6-gliedrigen Ring bilden, der ein weiteres Sauerstoff- oder Stickstoffatom enthalten kann und der gegebenenfalls durch C₁-C₄-Alkyl, C₁-C₄-Hydroxyalkyl oder C₁-C₄-Aminoalkyl substituiert ist.

5. Farbstoffe der Ansprüche 1 bis 4,
worin
W für 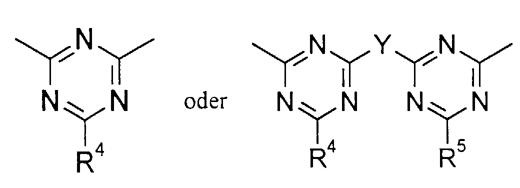
und
Y für 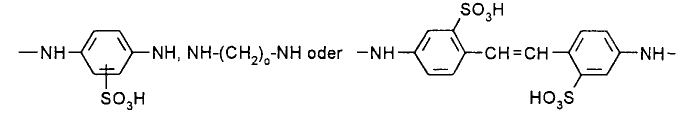 steht,
wobei o für 1 bis 6 steht,
und
R⁴ und R⁵ die in Anspruch 2 angegebene Bedeutung haben.

6. Verfahren zur Herstellung der Farbstoffe gemäß Anspruch 1
mit R = NHR² und 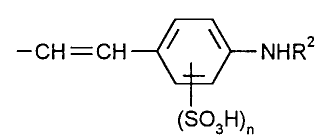 durch Umsetzung der Farbbase der Formel (IIa) oder (IIb) 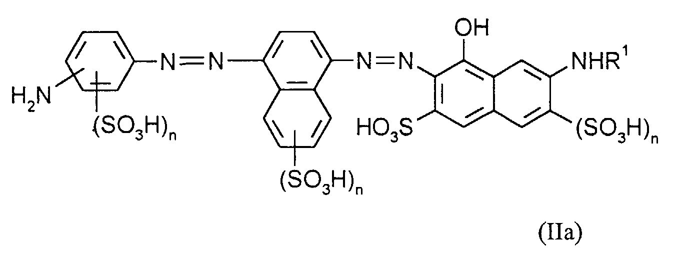 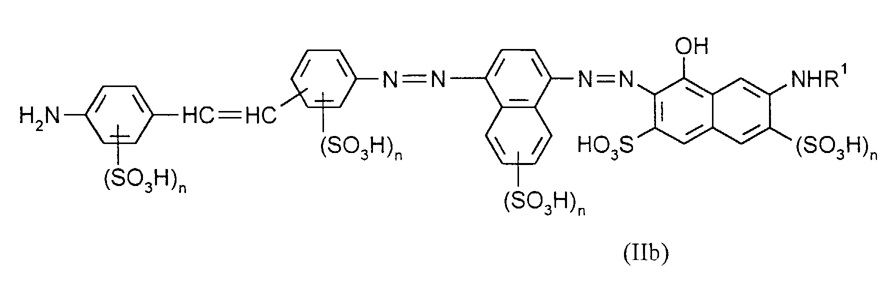 worin n und R¹ die in Anspruch 1 angegebene Bedeutung haben, mit einer Verbindung der Formel
Hal-W-NHR³ (III),
worin Hal für Chlor, Brom oder Fluor steht und
R³, und W die in Anspruch 1 angegebene Bedeutung haben.

7. Verfahren zur Herstellung der Farbstoffe gemäß Anspruch 1
mit R = -CH=CH-R³ und CH₂-CH₂-R³ durch Tetrazotierung der Amine (V) 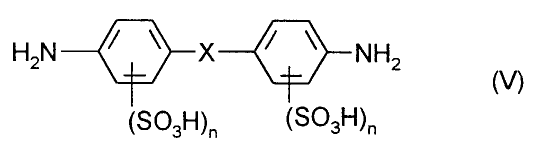 worin
n jeweils unabhängig voneinander für 0 oder 1 und
X für -CH=CH- oder -CH₂-CH₂-steht,
und Kupplung auf Verbindungen (VI) 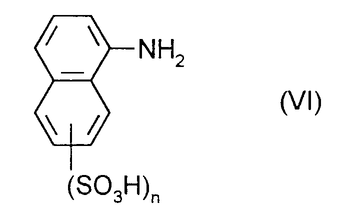 worin n für 0 oder 1 steht,
und anschließender Weitertetrazotierung und Kupplung auf (VII) 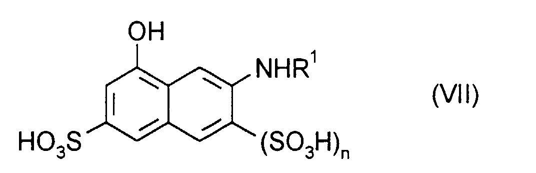 worin n und R¹ die in Anspruch 1 angegebene Bedeutung haben.

8. Verfahren zum Färben und Bedrucken von cellulosehaltigen Materialien, dadurch gekennzeichnet, daß mindestens ein Farbstoff der Formel (I) gemäß Anspruch 1 eingesetzt wird.

9. Flüssige Farbstoffpräparationen enthaltend mindestens einen Farbstoff der Formel (I) gemäß Anspruch 1.

10. Drucktinten gemäß Anspruch 9, enthaltend Wasser und/oder polare protische oder dipolare aprotische Lösungsmittel.

11. Verwendung der Drucktinten gemäß Anspruch 10 als Aufzeichnungsflüssigkeit für Ink-Jet-Aufzeichnungssysteme.

## Claims

1. Dyestuffs of the formula (I) 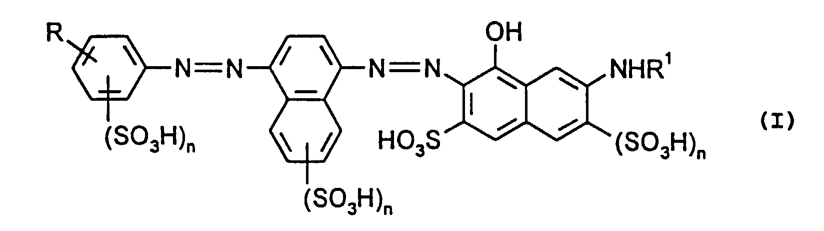 wherein
R represents NHR², -CH=CH-R³, -CH₂-CH₂-R³ or 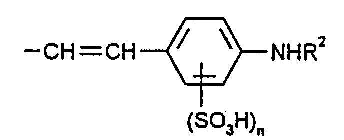
R¹ represents hydrogen, optionally substituted C₁-C₄ alkyl, optionally substituted C₁-C₄ alkylcarbonyl, optionally substituted phenyl or optionally substituted phenylcarbonyl,
R² represents -W-NHR³,
wherein
W represents a bridge member,
R³ represents 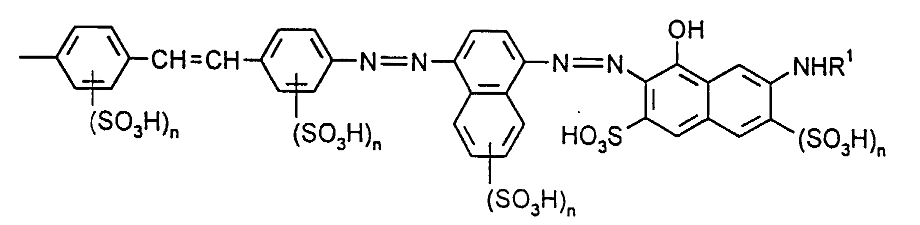
and n represents, in each case independently of one another, 0 or 1.

2. Dyestuffs of Claim 1, wherein
W represents 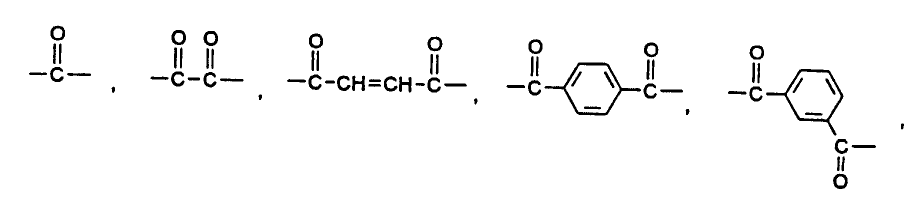 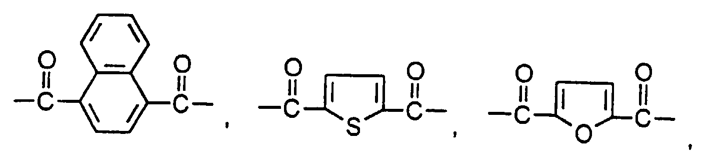 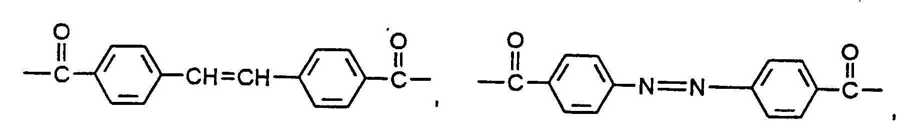 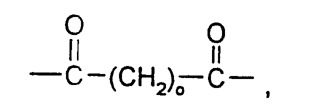 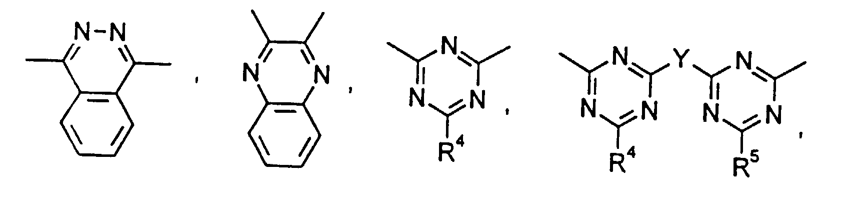 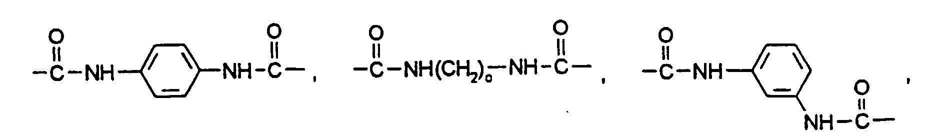 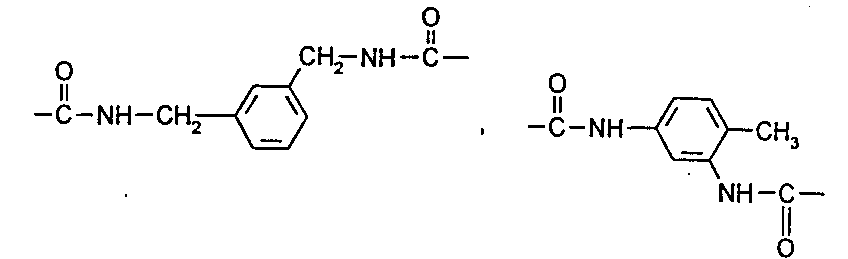
wherein
R⁴, R⁵ independently of one another represent halogen, hydroxyl, C₁-C₆-alkoxy, C₁-C₆-alkyl or an optionally substituted amino group, and
o represents 1 to 6
and
Y represents 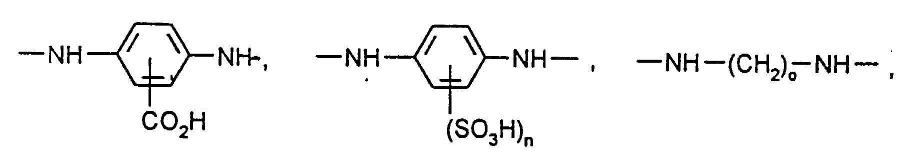 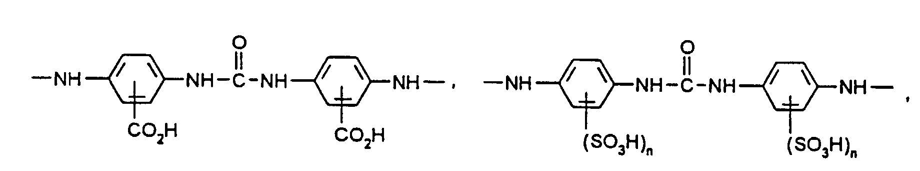 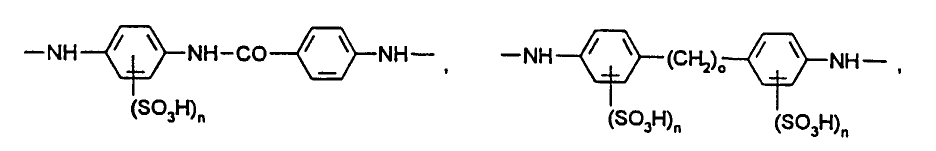 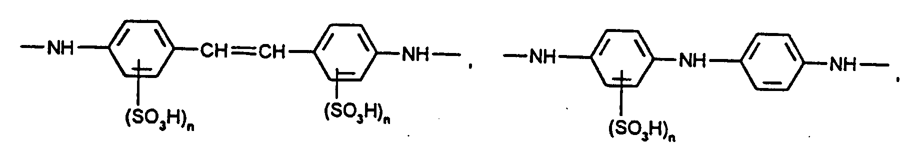 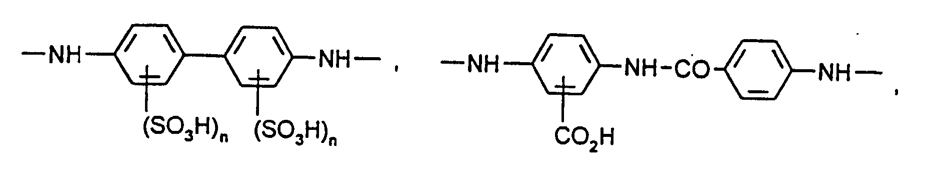 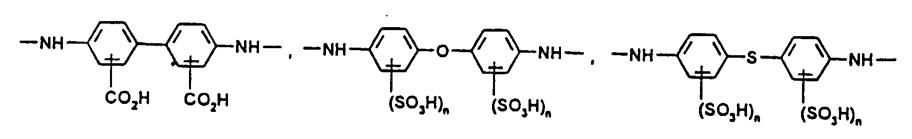
wherein
o represents 1 to 6 and
n represents, in each case independently of one another, 0 or 1.

3. Dyestuffs according to Claims 1 and 2,
wherein
R⁴ and R⁵ independently of one another represent halogen, in particular fluorine, chlorine or bromine, or an optionally substituted amino group of the formula
-NR⁷R⁸,
wherein
R⁷ and R⁸ independently of one another represent hydrogen or an aliphatic, aromatic, araliphatic or cycloaliphatic radical,
R⁸ furthermore also represents hydroxyl, C₁-C₄-alkoxy, amino, phenylamino or C₁-C₄-alkoxyamino,
or
R⁷ and R⁸ together with the nitrogen atom to which they are bonded, form a 3- to 8-membered, preferably 5- to 7-membered, saturated or unsaturated ring which optionally contains 1 or 2 further heteroatoms from the series consisting of oxygen, sulphur and nitrogen and is optionally substituted by C₁-C₄-alkyl, C₁-C₄-hydroxyalkyl or C₁-C₄-aminoalkyl.

4. Dyestuffs according to Claims 1 to 3,
wherein
R represents NHR², -CH=CH-R³, -CH₂-CH₂-R³ or 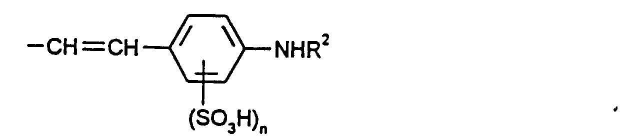
R¹ represents H, CH₃, C₂H₄OH, C₂H₄NH₂, phenyl, 3- or 4-sulphophenyl, 3- or 4-carboxyphenyl, acetyl, propionyl, benzoyl or maleinyl,
W represents a radical of the formula 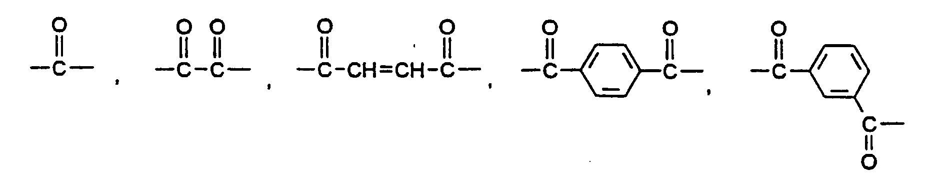 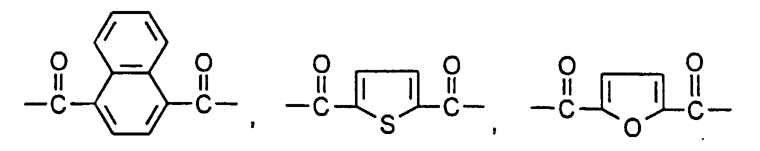 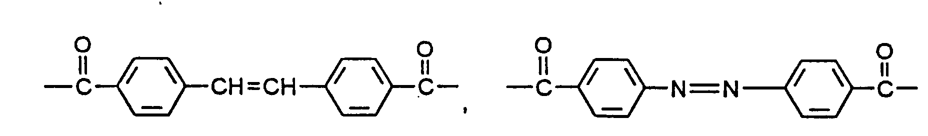 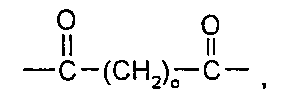 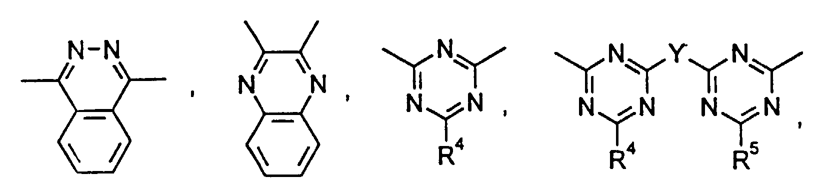 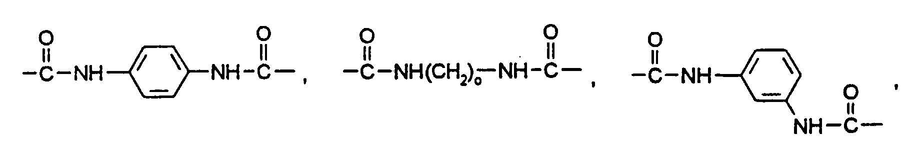 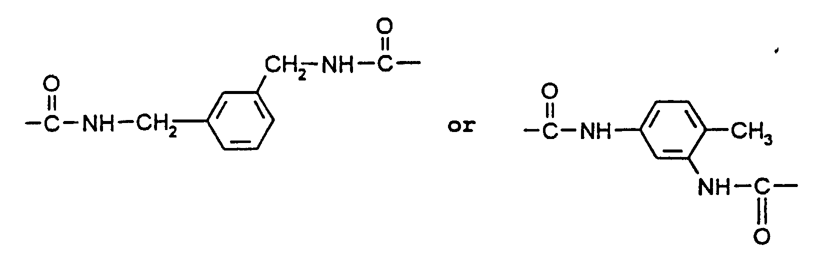
wherein
o represents 1 to 6,
Y represents a radical of the formula 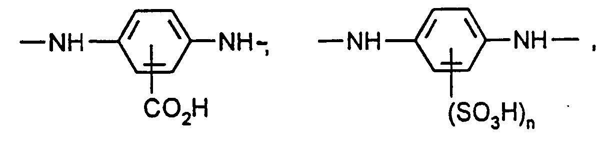 -NH-(CH₂)ₒ-NH-, 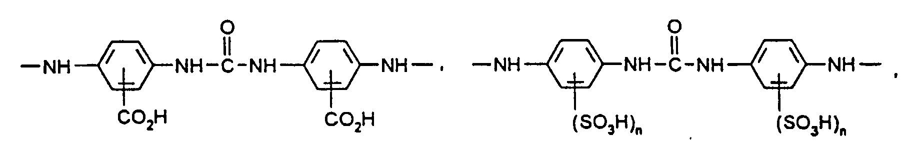 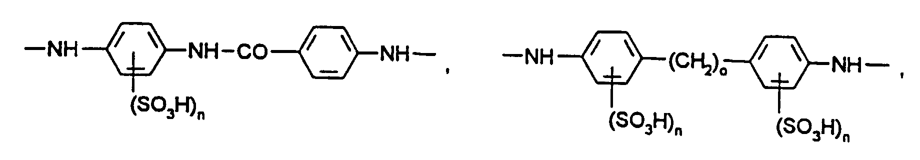 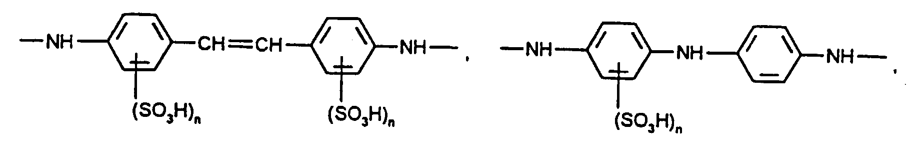 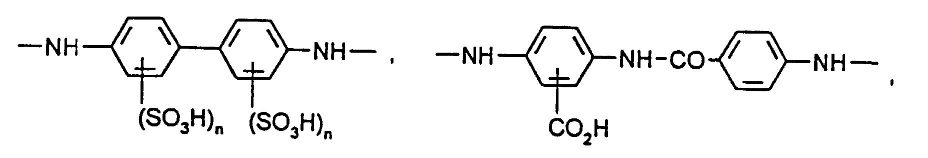 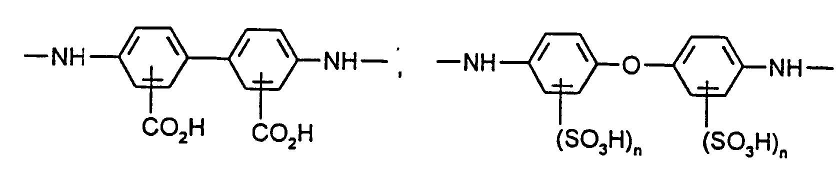 or 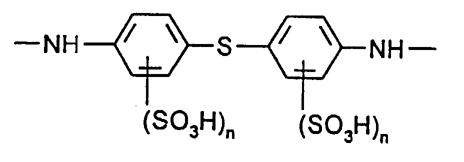
wherein
o represents 1 to 6 and
n represents, in each case independently of one another, 0 or 1, and the sum of all the n is ≥ 2,
and
R⁴ and R⁵ independently of one another represent fluorine, chlorine, bromine or an optionally substituted amino group of the formula
NR⁷R⁸
wherein
R⁷ and R⁸ independently of one another represent hydrogen, or represent C₁-C₆-alkyl which is optionally substituted by carboxyl, hydroxyl, C₁-C₄-alkoxy, amino or sulpho, or represent phenyl-C₁-C₄-alkyl,
R⁸ furthermore represents an ethyl radical substituted by a polyalkylene-polyamine, preferably a radical -CH₂CH₂-(NCH₂CH₂)₁₋₄-NH₂,
or
R⁷ and R⁸, together with the nitrogen atom to which they are bonded, form a saturated 5- or 6-membered ring, which can contain a further oxygen or nitrogen atom and which is optionally substituted by C₁-C₄-alkyl, C₁-C₄-hydroxyalkyl or C₁-C₄-aminoalkyl.

5. Dyestuffs of Claims 1 to 4,
wherein
W represents 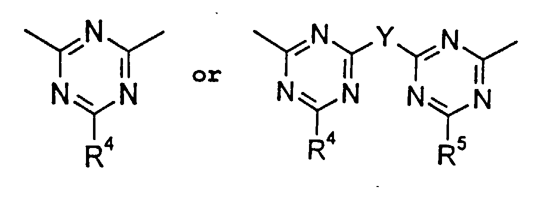
and
Y represents 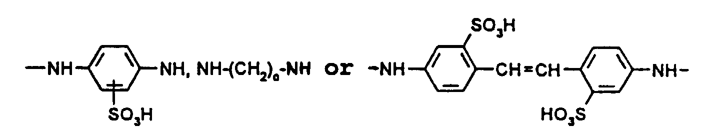
wherein o represents 1 to 6,
and
R⁴ and R⁵ have the meaning given in Claim 2.

6. Process for the preparation of the dyestuffs according to Claim 1
where R = NHR² and 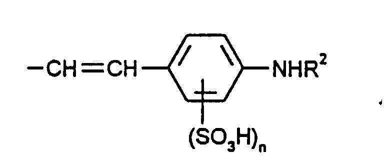 by reaction of the colour base of the formula (IIa) or (IIb) 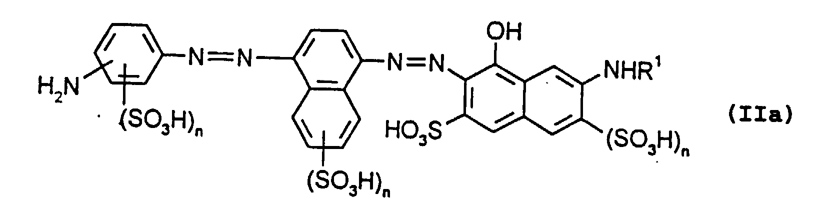 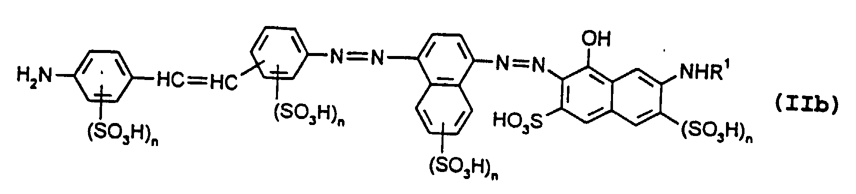 wherein n and R¹ have the meaning given in Claim 1, with a compound of the formula
Hal-W-NHR³ (III).
wherein Hal represents chlorine, bromine or fluorine and
R³ and W have the meaning given in Claim 1.

7. Process for the preparation of the dyestuffs according to Claim 1
where R = -CH=CH-R³ and CH₂-CH₂-R³, by tetrazotization of the amines (V) 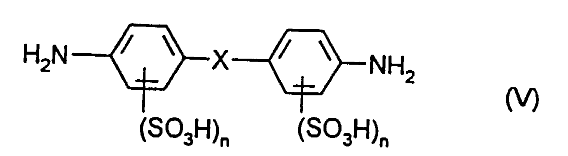 wherein
n represents, in each case independently of one another, 0 or 1 and
X represents -CH=CH- or -CH₂-CH₂-, and coupling of the tetrazotization product to compounds (VI) 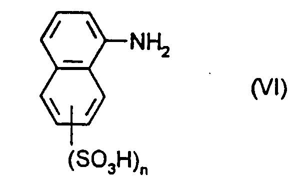
wherein n represents 0 or 1,
and subsequent further tetrazotization and coupling to (VII) 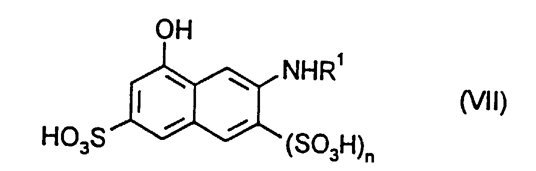 wherein n and R¹ have the meaning given in Claim 1.

8. Process for dyeing and printing cellulose-containing materials, characterized in that at least one dyestuff of the formula (I) according to Claim 1 is employed.

9. Liquid dyestuff preparations comprising at least one dyestuff of the formula (I) according to Claim 1.

10. Printing inks according to Claim 9, comprising water and/or polar protic or dipolar aprotic solvents.

11. Use of the printing inks according to Claim 10 as recording fluid for ink-jet recording systems.

## Revendications

1. Colorants de formule (I) 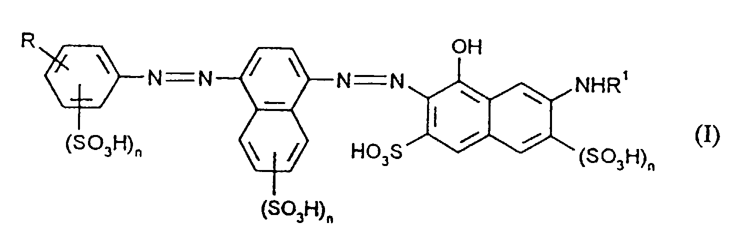 dans laquelle
R représente NHR², -CH=CH-R³, -CH₂-CH₂-R³ ou 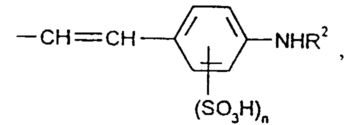
R¹ représente un atome d'hydrogène ou un groupe alkyle en C₁-C₄ éventuellement substitué, (alkyl en C₁-C₄)carbonyle éventuellement substitué, phényle éventuellement substitué ou phénylcarbonyle éventuellement substitué,
R² représente -W-NHR³,
où
W représente un groupe de pontage,
R³ est 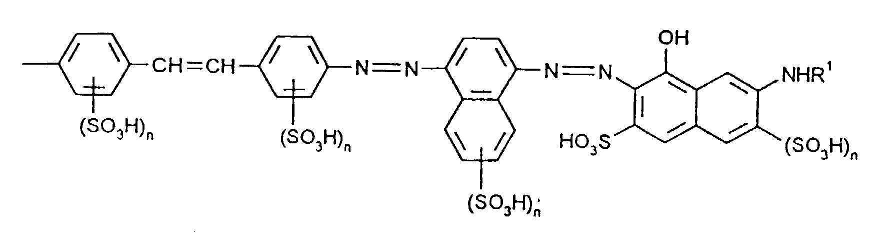 et les n sont chacun, indépendamment les uns des autres, égaux à 0 ou 1.

2. Colorants selon la revendication 1, dans lesquels
W représente 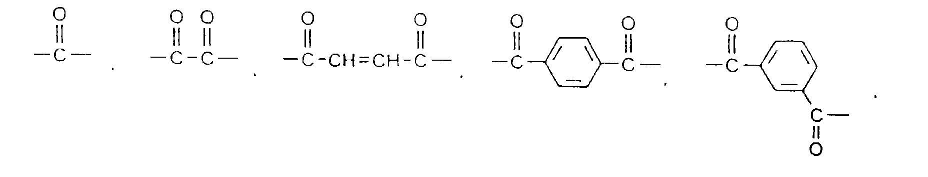 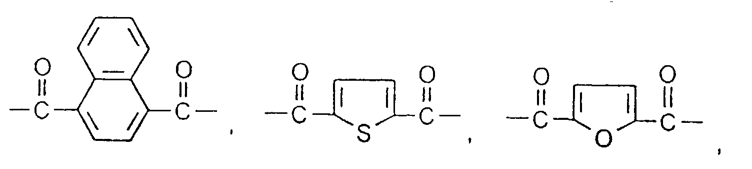 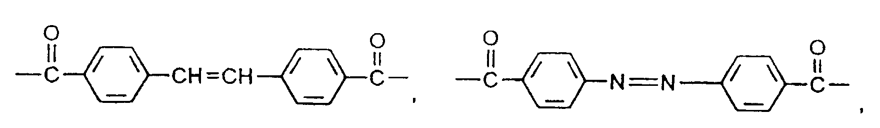 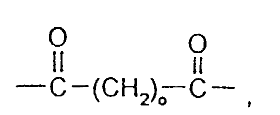 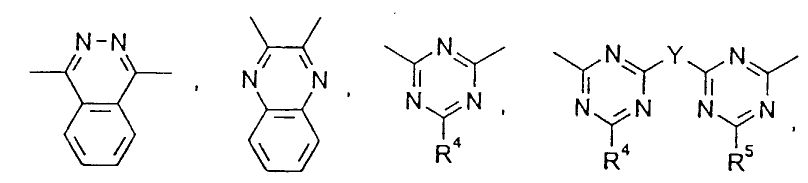 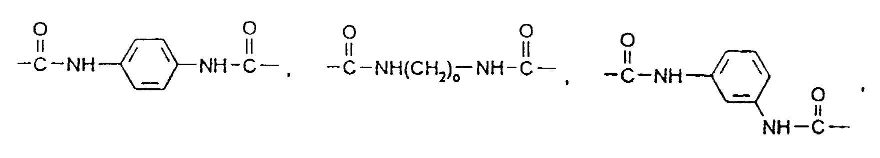 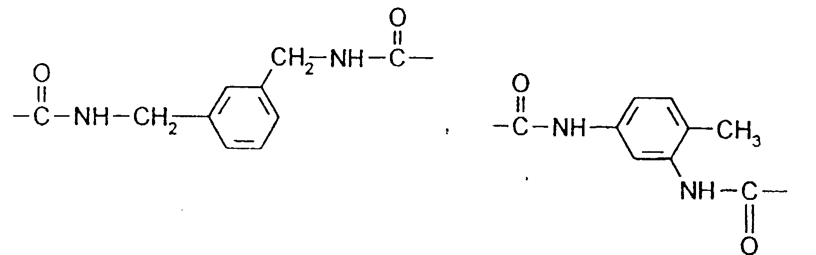 où
R⁴ et R⁵ représentent, indépendamment l'un de l'autre, un atome d'halogène, un groupe hydroxy, alcoxy en C₁-C₆ ou alkyle en C₁-C₆ ou un groupe amino éventuellement substitué et
o est compris entre 1 et 6,
et Y représente 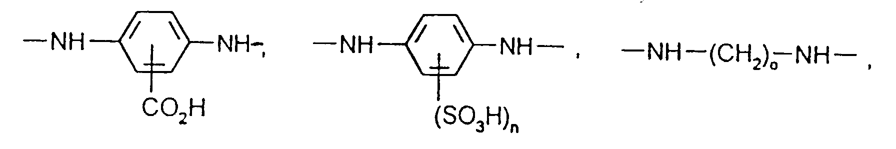 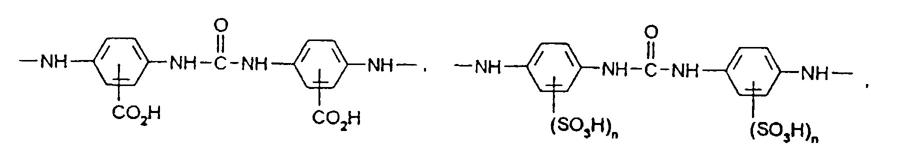 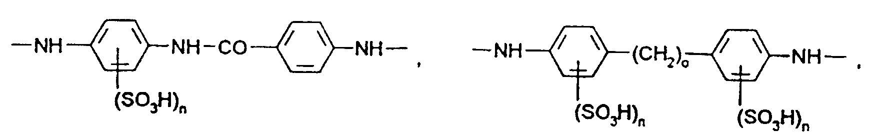 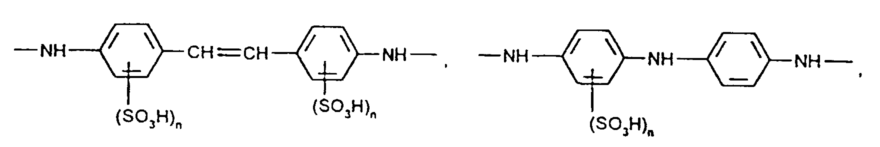 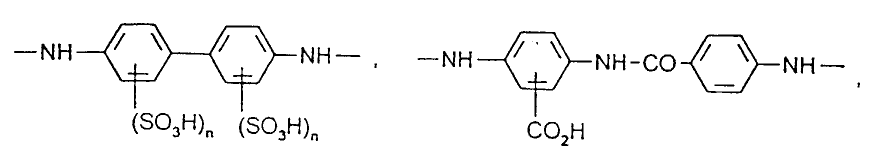 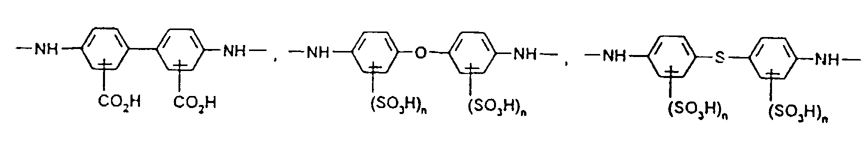 où
o est compris entre 1 et 6 et
les n sont chacun, indépendamment les uns des autres, égaux à 0 ou 1.

3. Colorants selon les revendications 1 et 2, dans lesquels
R⁴ et R⁵ représentent, indépendamment l'un de l'autre, un halogène, en particulier le fluor, le chlore ou le brome, ou un groupe amino éventuellement substitué de formule
-NR⁷R⁸,
dans laquelle
R⁷ et R⁸ représentent indépendamment l'un de l'autre un atome d'hydrogène ou un reste aliphatique, aromatique, araliphatique ou cycloaliphatique,
R⁸ représente aussi en outre un groupe hydroxy, alcoxy en C₁-C₄, amino, phénylamino ou alcoxyamino en C₁-C₄,
ou bien
R⁷ et R⁸ forment ensemble, avec l'atome d'azote auquel ils sont liés, un cycle saturé ou insaturé de 3 à 8 chaînons, de préférence de 5 à 7 chaînons, contenant éventuellement 1 ou 2 autres hétéroatomes de la série de l'oxygène, du soufre et de l'azote, et éventuellement substitué par alkyle en C₁-C₄, hydroxyalkyle en C₁-C₄ ou aminoalkyle en C₁-C₄.

4. Colorants selon les revendications 1 à 3, dans lesquels
R représente un groupe NHR², -CH=CH-R³, -CH₂-CH₂-R³ ou 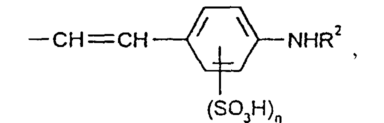
R¹ représente H ou un reste CH₃, C₂H₄OH, C₂H₄NH₂, phényle, 3- ou 4-sulfophényle, 3-ou 4-carboxyphényle, acétyle, propionyle, benzoyle ou maléyle,
W représente un reste de formule 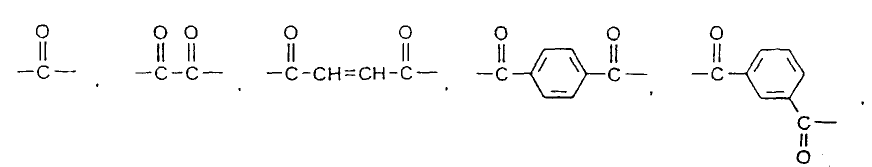 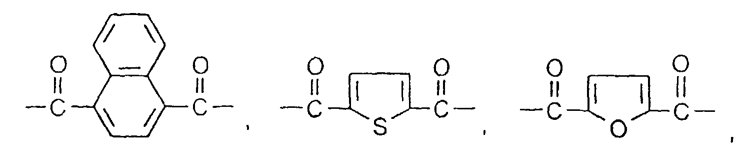 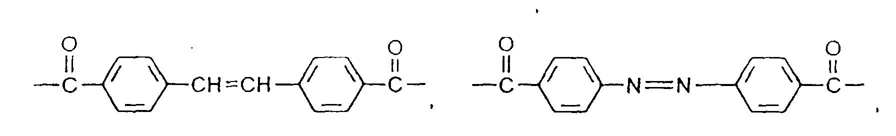 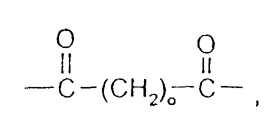 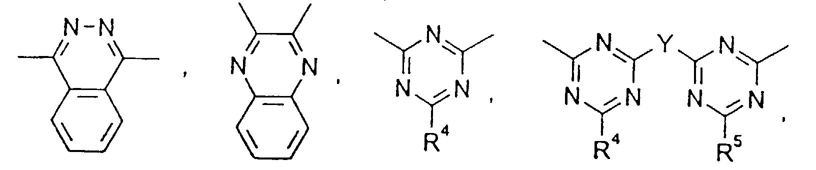 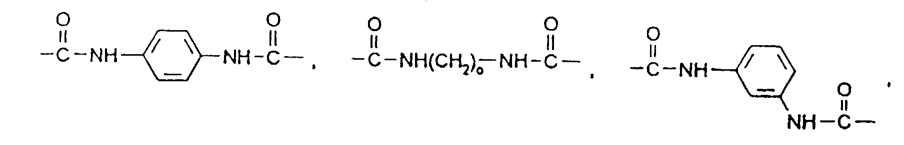 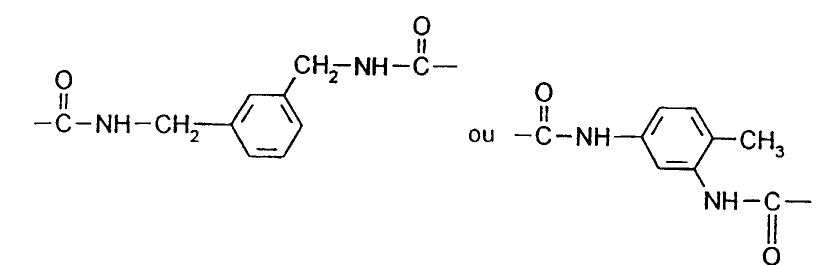
où
o est compris entre 1 et 6,
Y représente un reste de formule 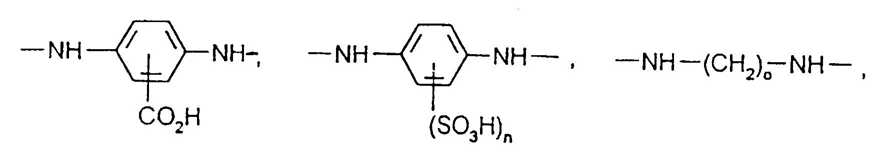 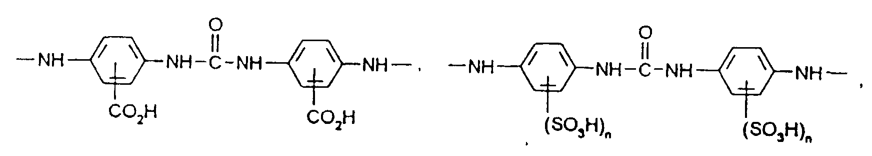 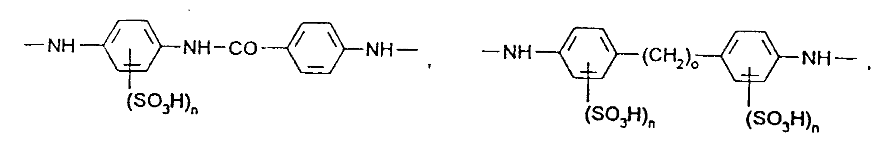 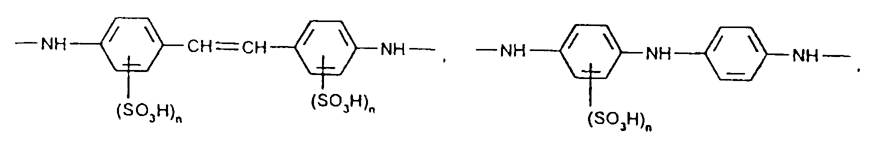 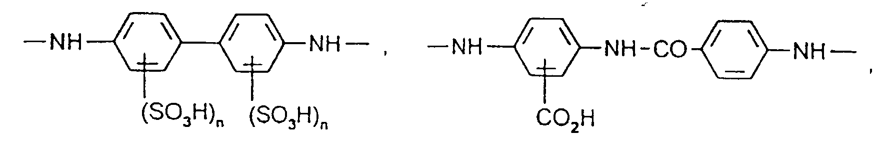 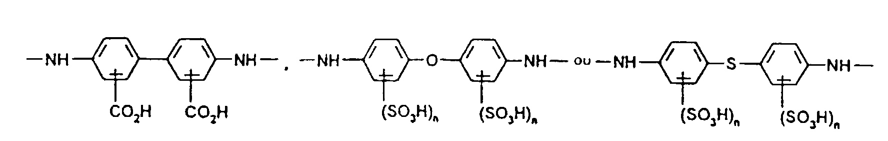
où
o est compris entre 1 et 6 et
les n sont chacun, indépendamment les uns des autres, égaux à 0 ou 1, et la somme de tous les n est ≥ 2,
et
R⁴ et R⁵ représentent, indépendamment l'un de l'autre, le fluor, le chlore ou le brome, ou un groupe amino éventuellement substitué de formule
-NR⁷R⁸,
dans laquelle
R⁷ et R⁸ représentent indépendamment l'un de l'autre un atome d'hydrogène, un reste alkyle en C₁-C₆ éventuellement substitué par carboxy, hydroxy, alcoxy en C₁-C₄, amino ou sulfo, ou un reste phényl(alkyle en C₁-C₄),
R⁸ représente en outre un reste éthyle substitué par une polyalkylènepolyamine, de préférence un reste -CH₂CH₂-(NCH₂CH₂)₁₋₄-NH₂,
ou bien
R⁷ et R⁸ forment ensemble, avec l'atome d'azote auquel ils sont liés, un cycle saturé de 5 ou 6 chaînons, pouvant contenir un autre atome d'oxygène ou d'azote et éventuellement substitué par alkyle en C₁-C₄, hydroxyalkyle en C₁-C₄ ou aminoalkyle en C₁-C₄.

5. Colorants selon les revendications 1 à 4, dans lesquels
W représente un groupe 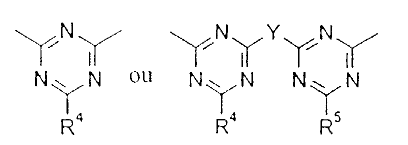 et
Y représente un groupe 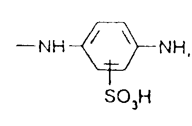 NH-(CH₂)ₒ-NH ou 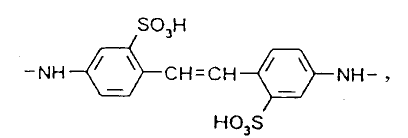 où o est compris entre 1 et 6,
et
R⁴ et R⁵ ont la signification donnée dans la revendication 2.

6. Procédé de préparation des colorants selon la revendication 1 dans lesquels R = NHR² et 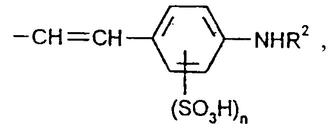 par réaction de la base de colorant de formule (lIa) ou (IIb) 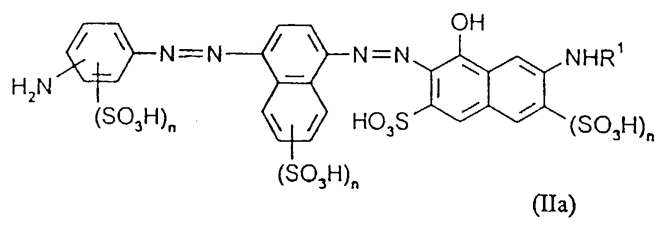 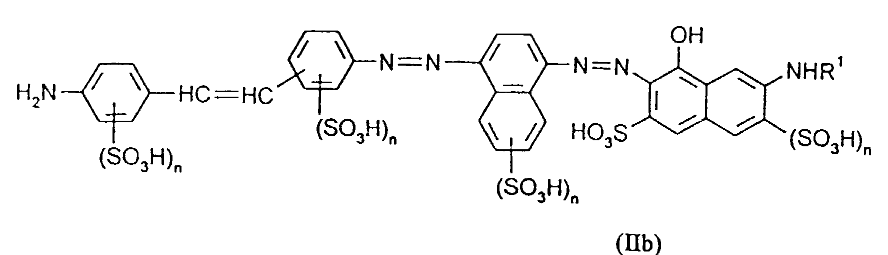 où n et R¹ ont la signification donnée dans la revendication 1, avec un composé de formule
Hal-W-NHR³ (III)
dans laquelle Hal représente le chlore, le brome ou le fluor, et
R³ et W ont la signification donnée dans la revendication 1.

7. Procédé de préparation des colorants selon la revendication 1 dans lesquels R = -CH=CH-R³ et -CH₂-CH₂-R³ , selon lequel on effectue une double diazotation des amines (V) 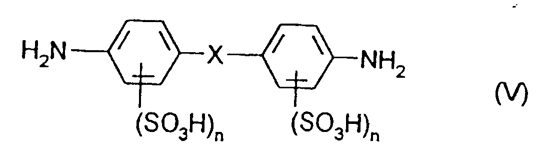 dans lesquelles
les n sont chacun, indépendamment l'un de l'autre, égaux à 0 ou 1, et
X représente -CH=CH- ou -CH₂-CH₂-,
et une copulation avec des composés (VI) 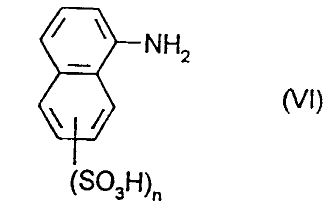 dans lesquels n est 0 ou 1,
puis une nouvelle double diazotation et une copulation avec (VII) 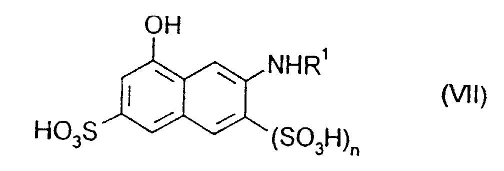 où n et R¹ ont la signification donnée dans la revendication 1.

8. Procédé de coloration et d'impression de matériaux cellulosiques, caractérisé en ce que l'on utilise au moins un colorant de formule (I) selon la revendication 1.

9. Compositions de colorants liquides contenant au moins un colorant de formule (I) selon la revendication 1.

10. Encres d'imprimerie selon la revendication 9, contenant de l'eau et/ou des solvants polaires protiques ou dipolaires aprotiques.

11. Utilisation des encres d'imprimerie selon la revendication 10 comme liquides d'imprimantes pour des imprimantes à jet d'encre.
